(19)

Europäisches
Patentamt
European
Patent Office
Office européen
des brevets

(11) **EP 4 290 416 A1**

(12) **EUROPEAN PATENT APPLICATION**

(43) Date of publication:
**13.12.2023 Bulletin 2023/50**

(21) Application number: **23166458.2**

(22) Date of filing: **04.04.2023**

(51) International Patent Classification (IPC):
**G06N 5/01** *(2023.01)*

(52) Cooperative Patent Classification (CPC):
**G06N 5/01**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.06.2022 JP 2022093460**

(71) Applicant: **FUJITSU LIMITED
Kawasaki-shi, Kanagawa 211-8588 (JP)**

(72) Inventor: **KANDA, Kouichi
Kawasaki-shi, Kanagawa, 211-8588 (JP)**

(74) Representative: **Hoffmann Eitle
Patent- und Rechtsanwälte PartmbB
Arabellastraße 30
81925 München (DE)**

(54) **INFORMATION PROCESSING APPARATUS, INFORMATION PROCESSING METHOD, AND PROGRAM**

(57) An information processing apparatus of acquiring a solution to a permutation optimization problem represented by an energy function of an Ising model, the apparatus including: a storage unit that stores problem information which indicates $M^2$ state variables (M is an integer equal to or more than 3) in the permutation optimization problem; and a processing unit that generates information on a first energy function which includes $N^2$ state variables obtained by adding ($N^2-M^2$) state variables (N is an integer more than M) to the $M^2$ state variables, based on the problem information, inputs the information on the first energy function to a search unit, obtain, from the search unit based on the first energy function, a first solution represented by values of the $N^2$ state variables, and generates a second solution to the permutation optimization problem by removing values of the ($N^2-M^2$) state variables from the first solution.

FIG. 1

EP 4 290 416 A1

**Description**

FIELD

The embodiments discussed herein are related to an information processing apparatus, an information processing method, and a program.

BACKGROUND

An information processing apparatus may be used for searching for a solution to a combinatorial optimization problem. The combinatorial optimization problem is converted into an energy function of an Ising model, which is a model representing a behavior of a spin of a magnetic body. The energy function may be referred to as an evaluation function or an objective function.

For example, the information processing apparatus searches for a combination that minimizes a value of the energy function among combinations of values of state variables included in the energy function. In this case, a combination of values of state variables that minimizes the value of the energy function corresponds to a ground state or an optimum solution represented by a set of state variables. As a method for acquiring an approximate solution to a combinatorial optimization problem in a practical time, a simulated annealing (SA) method, a replica exchange method, or the like based on a Markov-chain Monte Carlo (MCMC) method is applied.

Meanwhile, some combinatorial optimization problems have a constraint in which the number of state variables having a value of 1 among a plurality of state variables included in an energy function is only one, for example, a 1-Hot constraint. According to the 1-Hot constraint, when $N^2$ state variables are arranged in a matrix shape of N rows and N columns, a sum of values of the state variables included in each row and each column is 1. The 1-Hot constraint is referred to as a 2-Way 1-Hot constraint. For example, when $x_1$ to $x_9$ are arranged in a matrix shape of 3 rows and 3 columns, a constraint in which $x_1+x_2+x_3 = 1$, $x_4+x_5+x_6 = 1$, $x_7+x_8+x_9 = 1$, $x_1+x_4+x_7 = 1$, $x_2+x_5+x_8 = 1$, and $x_3+x_6+x_9 = 1$ is the 2-Way 1-Hot constraint. For example, a linear ordering problem has the 2-Way 1-Hot constraint.

A value of each state variable in N rows and N columns may be represented by a permutation of N different elements in the combinatorial optimization problem having the 2-Way 1-Hot constraint. For example, assuming that three different elements are represented by "1, 2, 3", the value of each state variable of the 3 rows and 3 columns is represented by (1, 2, 3), (2, 1, 3), or the like. For example, a position of an element of a permutation indicates a row, and a value of the element of the permutation indicates a column of a state variable, which is 1. In this manner, a solution satisfying the 2-Way 1-Hot constraint is represented by a permutation. A combinatorial optimization problem in which the solution is represented by the permutation is referred to as a permutation optimization problem.

For example, there is a proposal for an optimization apparatus that searches for a solution to the combinatorial optimization problem by using the 2-Way 1-Hot constraint.

There is another proposal for a planning apparatus that solves a problem of visiting planning for obtaining a traveling route having the shortest distance or the shortest traveling time among traveling routes along which all designated visiting destinations may be visited. There is still another proposal for a method of performing optimization for conversion into a functionally equivalent circuit that satisfies a constraint of locality, for example, a constraint of allowing only an interaction between close qubits, by inserting a swap gate into a quantum circuit that operates with a qubit representing a quantum state.

Japanese Laid-open Patent Publication No. 2021-157361, Japanese Laid-open Patent Publication No. 9-160981, and U.S. Patent No. 2020/0242295 are disclosed as related art.

SUMMARY

TECHNICAL PROBLEM

In the above-described optimization apparatus that searches for a solution to the combinatorial optimization problem having the 2-Way 1-Hot constraint, for example, a permutation optimization problem, values of at most four state variables are changed in one state transition trial. Meanwhile, when a state of a transition destination is determined only from states in which the values of at most four state variables are changed with respect to the current state, for example, in a case where a local solution is reached, it may not be possible to escape from the local solution.

An object of an aspect of the embodiment is to provide an information processing apparatus, an information processing method, and a program capable of improving solution-searching performance.

SOLUTION TO PROBLEM

According to an aspect of the embodiments, there is provided an information processing apparatus of acquiring a solution to a permutation optimization problem represented by an energy function of an Ising model, the information processing apparatus including: a storage unit that stores problem information which indicates $M^2$ state variables (M is an integer equal to or more than 3) in the permutation optimization problem; and a processing unit that generates information on a first energy function which includes $N^2$ state variables obtained by adding $(N^2-M^2)$ state variables (N is an integer more than M) to the $M^2$ state variables, based on the problem information, inputs the information on the first energy function to a search unit which repeatedly performs a process of changing values of four state variables in accordance with a change amount of a value of the energy function in a case where the values of the four state variables are changed so as to satisfy a constraint in which a sum of values of state variables included in each row is 1 and a sum of values of state variables included in each column is 1 when the $N^2$ state variables are arranged in N rows and N columns, obtain, from the search unit based on the first energy function, a first solution represented by values of the $N^2$ state variables, and generates a second solution to the permutation optimization problem by removing values of the $(N^2-M^2)$ state variables from the first solution.

ADVANTAGEOUS EFFECTS OF INVENTION

In the aspect, it is possible to improve solution-searching performance.

BRIEF DESCRIPTION OF DRAWINGS

FIG. 1 is a diagram for describing an information processing apparatus according to a first embodiment;
FIG. 2 is a diagram illustrating a hardware example of an information processing apparatus according to a second embodiment;
FIG. 3 is a diagram illustrating a bit flip control example with 2-Way 1-Hot;
FIGs. 4A and 4B are diagrams illustrating an example of a correspondence relationship between a state and a permutation of an Ising model;
FIG. 5 is a diagram illustrating a functional example of the information processing apparatus;
FIG. 6 is a diagram illustrating an example of a method of adding a redundant element in an LOP;
FIG. 7 is a diagram illustrating an example of adding a redundant variable;
FIG. 8 is a diagram illustrating an acquisition example of a solution by a control unit;
FIGs. 9A and 9B are diagrams illustrating an example of a state transition destination candidate according to the presence or absence of the redundant element;
FIG. 10 is a flowchart illustrating a process example of the information processing apparatus;
FIG. 11 is a flowchart illustrating a process example of an information processing apparatus according to a third embodiment;
FIG. 12 is a diagram illustrating an example of a redundant variable flag according to a fourth embodiment;
FIG. 13 is a diagram illustrating an example of the redundant variable flag in a case where there are a plurality of redundant elements;
FIGs. 14A and 14B are diagrams illustrating an example of a state transition;
FIG. 15 is a diagram illustrating a functional example of the information processing apparatus; and
FIG. 16 is a flowchart illustrating a process example of a search unit.

DESCRIPTION OF EMBODIMENTS

Hereinafter, the present embodiments will be described with reference to the drawings.

[First Embodiment]

A first embodiment will be described.

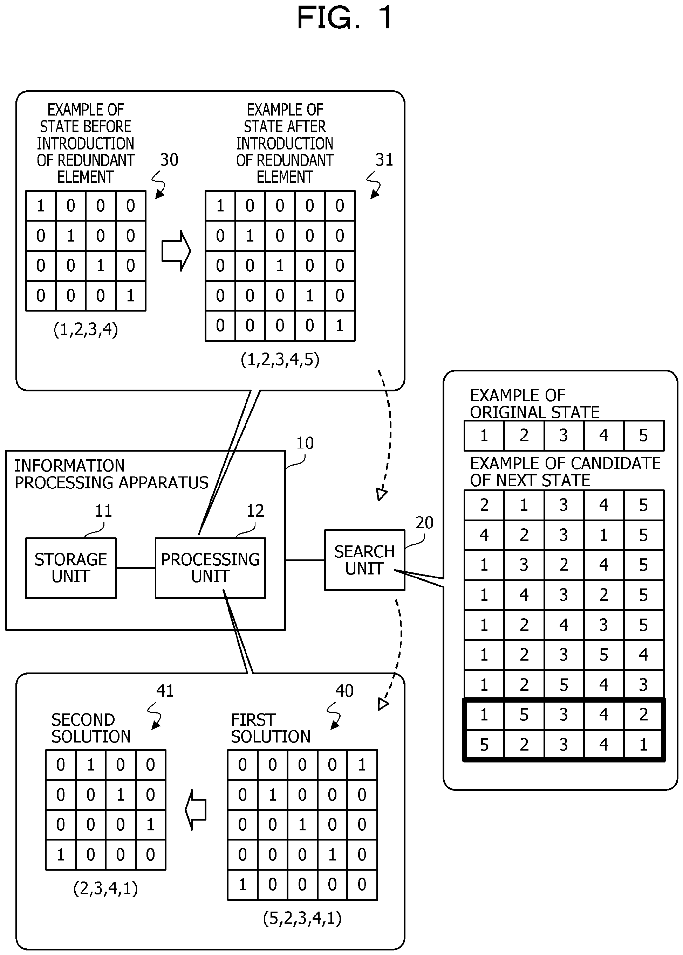

FIG. 1 is a diagram illustrating an information processing apparatus according to the first embodiment.
An information processing apparatus 10 inputs information on an energy function representing a combinatorial optimization problem to a search unit 20, and acquires a solution searched by the search unit 20. The search unit 20 may be an apparatus different from the information processing apparatus 10 or may be included in the information processing apparatus 10. The search unit 20 searches for the solution to the combinatorial optimization problem by using an MCMC method, and outputs the searched solution. For example, the search unit 20 uses an SA method or the like based on the MCMC method to search for the solution.

The information processing apparatus 10 includes a storage unit 11, and a processing unit 12. As the storage unit 11, for example, a volatile storage device such as a random-access memory (RAM) is used. The processing unit 12 may be an electronic circuit such as a central processing unit (CPU), a digital signal processor (DSP), an application-specific integrated circuit (ASIC), a field-programmable gate array (FPGA), or a graphics processing unit (GPU). The processing unit 12 may be a processor that executes a program. The "processor" may include a set of a plurality of processors (multiprocessor). The search unit 20 is implemented by an electronic circuit such as an FPGA or a GPU.

The combinatorial optimization problem is formulated by an Ising-type energy function, and is replaced with, for example, a problem that minimizes a value of an energy function. The energy function may also be referred to as an objective function, an evaluation function, or the like. The energy function includes a plurality of state variables. The state variable is a binary variable having a value of 0 or 1. The state variable may also be referred to as a bit. A solution to the combinatorial optimization problem is represented by values of the plurality of state variables. The solution that minimizes the value of the energy function represents a ground state of an Ising model, and corresponds to an optimum solution to the combinatorial optimization problem. The value of the energy function is represented as energy.

The Ising-type energy function is represented by Equation (1).

$$E(\boldsymbol{x}) = -\sum_{\langle i,j \rangle} W_{ij} x_i x_j - \sum_i b_i x_i \tag{1}$$

A state vector x has a plurality of state variables as elements, and represents a state of the Ising model. Equation (1) is an energy function formulated in a quadratic unconstrained binary optimization (QUBO) form. In a case of a problem of maximizing energy, a sign of the energy function may be reversed.

A first term on the right side of Equation (1) is obtained by integrating a product of values of two state variables and a weight coefficient without omission and duplication for all combinations of two state variables that are selectable from all state variables. Subscripts i and j are indices of state variables. $x_i$ is an i-th state variable. $x_j$ is a j-th state variable. $W_{ij}$ is a weight between the i-th state variable and the j-th state variable or a weight coefficient indicating a strength of coupling. $W_{ij} = W_{ji}$, and $W_{ii} = 0$.

A second term on the right side of Equation (1) is a sum of a product of a value of the state variable and a bias for each of all the state variables. $b_i$ indicates a bias for the i-th state variable. Problem data including the weight coefficient, the bias, the state vector, or the like included in the energy function is stored in the storage unit 11. In Equation (1), when the value of the state variable $x_i$ is changed to $1-x_i$, an increase in $x_i$ may be represented as $\delta x_i = (1-x_i)-x_i = 1-2x_i$. A change amount $\Delta E_i$ of energy according to a change in $x_i$ is represented by Equation (2).

$$
\begin{aligned}
\Delta E_i &= E(\boldsymbol{x})\Big|_{x_i \to 1-x_i} - E(\boldsymbol{x}) \\
&= -\delta x_i \left( \sum_j W_{ij} x_j + b_i \right) \\
&= -\delta x_i h_i \\
&= \begin{cases} -h_i & for \ x_i = 0 \to 1 \\ +h_i & for \ x_i = 1 \to 0 \end{cases}
\end{aligned}
\tag{2}
$$

$h_i$ is referred to as a local field, and is represented by Equation (3). The local field may also be referred to as a local field (LF).

$$h_i = \sum_j W_{ij} x_j + b_i \tag{3}$$

A change amount $\delta h_i^{(j)}$ of the local field $h_i$ when the state variable $x_j$ is changed is represented by Equation (4).

$$\delta h_i^{(j)} = \begin{cases} +W_{ij} & for \ x_j = 0 \rightarrow 1 \\ -W_{ij} & for \ x_j = 1 \rightarrow 0 \end{cases} \qquad (4)$$

By adding the change amount $\delta h_i^{(j)}$ to $h_i$ when the value of the state variable $x_j$ is changed, $h_i$ corresponding to a state after the change of the value of $x_j$ is obtained.

A Metropolis method or a Gibbs method is used for determining whether or not a state transition in which an energy change is $\Delta E_i$, for example, the change of the value of the state variable $x_i$ is allowed, in a search for the ground state. For example, in a neighbor search for searching for a transition from a certain state to another state in which energy is lower than energy of the state, the transition to not only a state in which energy is lowered but also a state in which energy is increased is stochastically allowed. For example, a probability A of accepting the change in value of the state variable of the energy change $\Delta E$ is represented by Equation (5).

$$A(\Delta E) = \begin{cases} \min\left[1, \exp(-\beta \cdot \Delta E)\right] & \text{Metropolis} \\ 1/\left[1 + \exp\left(\beta \cdot \Delta E\right)\right] & \text{Gibbs} \end{cases} \qquad (5)$$

$\beta$ is a reciprocal number ($\beta = 1/T$) of a temperature value T (T > 0), and is referred to as an inverse temperature. An operator min indicates a minimum value of arguments. An upper right side of Equation (5) corresponds to the Metropolis method. A lower right side of Equation (5) corresponds to the Gibbs method. By comparing a uniform random number u satisfying 0 < u < 1 with A for a certain index i, and when u < A, the search unit 20 accepts a change in value of the state variable $x_i$ and changes the value of the state variable $x_i$. Unless u < A, the search unit 20 does not accept the change in value of the state variable $x_i$ and does not change the value of the state variable $x_i$. According to Equation (5), as $\Delta E$ is a larger value, A is smaller. As $\beta$ is smaller, for example, T is larger, a state transition in which $\Delta E$ is larger is more likely to be allowed. For example, in a case where a determination criterion of the Metropolis method is used, the transition determination may be performed by Equation (6) obtained by modifying Equation (5).

$$\ln(u) \times T \le -\Delta E \qquad (6)$$

For example, in a case where the energy change $\Delta E$ satisfies Equation (6) with respect to the uniform random number u (0 < u ≤ 1), the change in value of the corresponding state variable is allowed. For the uniform random number u, in a case where the energy change $\Delta E$ does not satisfy Equation (6), the change in value of the corresponding state variable is not allowed. $\ln(u) \cdot T$ corresponds to a thermal noise. For example, in the SA method, a solution is searched while gradually decreasing the temperature value T from a maximum temperature value to a minimum temperature value.

The search unit 20 efficiently solves the combinatorial optimization problem having the 2-Way 1-Hot constraint, for example, a permutation optimization problem by excluding the search for a state other than the state satisfying the 2-Way 1-Hot constraint. The permutation optimization problem is a problem for obtaining a permutation that minimizes or maximizes a value of an energy function, the permutation being represented by values of $N^2$ state variables. In a case of excluding the search for the state other than the state satisfying the 2-Way 1-Hot constraint, the search unit 20 changes the values of the four state variables in one state transition.

Hereinafter, it is assumed that $M^2$ state variables (M is an integer equal to or more than 3) included in the energy function have the 2-Way 1-Hot constraint. By changing the values of the four state variables in one state transition so as to satisfy a constraint in which a sum of the values of the state variables included in each row and each column when these state variables are arranged in M rows and M columns is 1, a search for a state other than a state satisfying the 2-Way 1-Hot constraint is excluded. For example, in a case where the $M^2$ state variables are arranged in M rows and M columns, $x_1$ to $x_M$ correspond to a first column to an M-th column of a first row, $x_{M+1}$ to $x_{2M}$ correspond to a first column to an M-th column of a second row, and then $x_{M^2-M+1}$ to $x_{M^2}$ correspond to a first column to an M-th column of an M-th row, in the same manner.

In a case where one of the state variables having a value of 0 is set as an update target candidate in a state in which the 2-Way 1-Hot constraint is satisfied, state variables of other three update target candidates are determined.

For example, it is assumed that values of four state variables $(x_i, x_j, x_k, x_l)$ of index = i, j, k, l (i < j < k < l) are

changed. $x_i$ and $x_j$ belong to the same row. $x_i$ and $x_k$ belong to the same column. $x_k$ and $x_l$ belong to the same row. $x_j$ and $x_l$ belong to the same column.

In a case where $x_j$, which is a state variable having a value of 0, is an update target candidate, $x_i$ and $x_l$, which are state variables having a value of 1 among the state variables included in the same row and the same column as $x_j$, are the update target candidates. $x_k$ having a value of 0 in the same column as $x_i$ and in the same row as $x_l$ is the update target candidate. The changes in values of these four state variables ($x_i$, $x_j$, $x_k$, $x_l$) may be represented by Equation (7).

$$x_i : 1{\rightarrow}0, \quad x_j : 0{\rightarrow}1, \quad x_k : 0{\rightarrow}1, \quad x_l : 1{\rightarrow}0 \tag{7}$$

Assuming that an energy change of the Ising model occurring in a case where the values of four state variables ($x_i$, $x_j$, $x_k$, $x_l$) are changed is $\Delta E_j$, $\Delta E_j$ may be represented by the following Equation (8).

$$\Delta E_j = (h_i + h_l) - (h_j + h_k) - (W_{il} + W_{jk}) \tag{8}$$

A change amount $\Delta h_m$ (m = 1, 2, ..., and n) of a local field according to a change in $x_i$, $x_j$, $x_k$, and $x_l$ is represented by the following Equation (9).

$$\Delta h_m = W_{mj} + W_{mk} - (W_{mi} + W_{ml}) \tag{9}$$

In this manner, in the permutation optimization problem, $\Delta E_j$ of Equation (8) is used for $\Delta E$ of Equation (5) or Equation (6). $\Delta h_m$ in Equation (9) is used instead of $\delta h_i^{(j)}$ in Equation (4). The search unit 20 holds the values of the $M^2$ state variables. The search unit 20 holds a local field $h_m$ corresponding to each of the $M^2$ state variables. Based on each local field, the search unit 20 calculates $\Delta E_j$. Based on $\Delta E_j$ and Equation (5) or Equation (6), the search unit 20 determines four state variables of which values are allowed to be changed. Among the $M^2$ state variables held in the search unit 20, the search unit 20 transitions a state of the Ising model, by changing the values of four state variables of which the values are allowed to be changed. As the values of the four state variables are changed, the search unit 20 updates $h_m$ held in the search unit 20 to $h_m = h_m + \Delta h_m$.

For example, the search unit 20 may repeatedly perform a process of sequentially selecting four state variables to be change candidates, performing calculation of $\Delta E_j$ or determination of Equation (5) or Equation (6), and changing values of the four state variables of which the values are allowed to be changed. Alternatively, the search unit 20 may perform the calculation of $\Delta E_j$ and the determination of Equation (5) or Equation (6) in parallel, for a plurality of sets of four state variables of the change candidates. In this case, the search unit 20 repeatedly performs a process of randomly selecting one from a set of which a value change is allowed, and changing the values of four state variables belonging to the set.

In this manner, the search unit 20 has a mechanism of changing the values of at most four state variables in one trial of a state transition in searching for a solution to the permutation optimization problem. The value of each state variable in M rows and M columns may be represented by a permutation. For example, a position of an element of a permutation indicates a row, and a value of the element of the permutation indicates a column of a state variable, which is 1. FIG. 1 illustrates a case of M = 4, for example, a permutation (1, 2, 3, 4) corresponding to one state 30 represented by a total of 16 state variables of 4 rows and 4 columns. For example, a p-th value q from a left of the permutation indicates that an element of a p-th row from a top and a q-th column from a left of a matrix indicated by the state 30 is 1. The p-th value q from the left of the permutation may indicate that an element in a p-th column from a left and a q-th row from a top of the matrix indicated by the state 30 is 1.

An operation of changing the values of at most the four state variables by the search unit 20 corresponds to an operation of exchanging positions of arbitrary two elements in the permutation. Meanwhile, with one operation by the search unit 20, it is only possible to exchange the two elements such as (1, 2, 4, 3), (1, 4, 3, 2), and (4, 2, 3, 1), for the original permutation (1, 2, 3, 4).

When a state of the next transition destination is determined by such an operation, for example, in a case where a local solution is reached, it may not be possible to escape from the local solution, and a more appropriate solution may not be obtained.

Therefore, the processing unit 12 adds $N^2$-$M^2$ state variables corresponding to redundant elements in the permutation to the original state variables of M rows and M columns to obtain state variables of N rows and N columns. The redundant element is an element introduced for convenience to search for a solution. As an example, the processing unit 12 adds a redundant element "5" to the permutation (1, 2, 3, 4) corresponding to the state 30 to obtain a permutation (1, 2, 3, 4, 5). In this case, N = 5. Nine state variables corresponding to the redundant element are added to the 16 state variables corresponding to the original permutation.

The permutation (1, 2, 3, 4, 5) corresponds to a state 31 represented by state variables of 5 rows and 5 columns. In the example of the state 31, a state variable belonging to the fifth row and a state variable belonging to the fifth column are the state variables corresponding to the redundant element "5". For example, the processing unit 12 causes the storage unit 11 to hold information indicating that a state variable having a value of 1 in the fifth column and a state variable belonging to the same row and column as the state variable correspond to the redundant element "5". This is because the state variable corresponding to the redundant element "5" may be identified later.

In a specific permutation optimization problem such as a linear ordering problem (LOP), it is possible to create an energy function such that energy of a solution including a redundant element and energy of a solution obtained by removing the redundant element from the solution are equivalent to each other. For example, the LOP is a problem for obtaining a permutation n representing conversion such that a sum of elements above a diagonal element of a matrix after the conversion of a problem matrix A having n rows and n columns given as problem information is maximized. An energy function corresponding to the original problem matrix is referred to as an energy function E1. The LOP is formulated by Equation (10). The permutation n is represented by Equation (11).

$$\max \left( \sum_{i=1}^{n-1} \sum_{j=i+1}^{n} a_{\pi(i)\pi(j)} \right) \tag{10}$$

$$\begin{pmatrix} 1 & \dots & n \\ \pi(1) & \dots & \pi(n) \end{pmatrix} \tag{11}$$

For example, when n = 4, the matrix A is represented by Equation (12).

$$\mathbf{A} = \begin{pmatrix} a_{11} & a_{12} & a_{13} & a_{14} \\ a_{21} & a_{22} & a_{23} & a_{24} \\ a_{31} & a_{32} & a_{33} & a_{34} \\ a_{41} & a_{42} & a_{43} & a_{44} \end{pmatrix} \tag{12}$$

For example, when the permutation n is represented by Equation (13), a permutation matrix X corresponding to the permutation n is represented by Equation (14). A matrix $^{t}XAX$ obtained by converting the problem matrix A with the permutation matrix X is represented by Equation (15). $^{t}X$ is a transposed matrix of X.

$$\begin{pmatrix} 1 & 2 & 3 & 4 \\ 3 & 4 & 2 & 1 \end{pmatrix} \tag{13}$$

$$\mathbf{X} = \begin{pmatrix} 0 & 0 & 0 & 1 \\ 0 & 0 & 1 & 0 \\ 1 & 0 & 0 & 0 \\ 0 & 1 & 0 & 0 \end{pmatrix} \tag{14}$$

$$^{t}\mathbf{XAX} = \begin{pmatrix} a_{33} & a_{34} & a_{32} & a_{31} \\ a_{43} & a_{44} & a_{42} & a_{41} \\ a_{23} & a_{24} & a_{22} & a_{21} \\ a_{13} & a_{14} & a_{12} & a_{11} \end{pmatrix} \qquad (15)$$

A cost Cost corresponding to a value of an energy function for the matrix $^{t}$XAX is represented by Equation (16).

$$\text{Cost} = a_{34} + a_{32} + a_{31} + a_{42} + a_{41} + a_{21} \qquad (16)$$

In order to obtain the cost Cost as described above, the weight coefficient matrix W is calculated by Equation (17) based on the problem matrix A.

$$\mathbf{W} = \begin{pmatrix} 0 & \mathbf{A} & \dots & \mathbf{A} \\ 0 & 0 & \dots & \mathbf{A} \\ \vdots & \vdots & \ddots & \vdots \\ 0 & 0 & \dots & 0 \end{pmatrix} + \begin{pmatrix} 0 & 0 & \dots & 0 \\ ^{t}\mathbf{A} & 0 & \dots & 0 \\ \vdots & \vdots & \ddots & \vdots \\ ^{t}\mathbf{A} & ^{t}\mathbf{A} & \dots & 0 \end{pmatrix}$$

$$= \begin{pmatrix} 0 & \mathbf{A} & \dots & \mathbf{A} \\ ^{t}\mathbf{A} & 0 & \dots & \mathbf{A} \\ \vdots & \vdots & \ddots & \vdots \\ ^{t}\mathbf{A} & ^{t}\mathbf{A} & \dots & 0 \end{pmatrix} \qquad (17)$$

$^{t}$A is a transposed matrix of the matrix A. When A has n rows and n columns, W has $n^2$ rows and $n^2$ columns. A is not limited to a symmetric matrix, and W is a symmetric matrix. For example, the processing unit 12 converts A in Equation (12) into Equation (18), for the state 31 to which the state variable corresponding to the redundant element is added.

$$\mathbf{A} = \begin{pmatrix} a_{11} & a_{12} & a_{13} & a_{14} & 0 \\ a_{21} & a_{22} & a_{23} & a_{24} & 0 \\ a_{31} & a_{32} & a_{33} & a_{34} & 0 \\ a_{41} & a_{42} & a_{43} & a_{44} & 0 \\ 0 & 0 & 0 & 0 & 0 \end{pmatrix} \qquad (18)$$

By substituting the matrix A after the conversion of Equation (18) into Equation (17), the processing unit 12 obtains W in a case where the redundant element is introduced. The processing unit 12 sets a bias b of each state variable corresponding to the redundant element to 0.

By doing so, a permutation after the introduction of the redundant element may be treated as a state in which energy is equivalent, regardless of a position of the redundant element in the permutation. For example, for the redundant element "5", all permutations (1, 2, 3, 4, 5), (1, 2, 3, 5, 4), (1, 2, 5, 3, 4), (1, 5, 2, 3, 4), and (5, 1, 2, 3, 4) are equivalent.

The processing unit 12 inputs information of an energy function E2 including the weight coefficient matrix W and $N^2$ state variables after the introduction of the redundant element to the search unit 20, and causes the search unit 20 to execute a search for a solution based on the energy function E2.

By searching for the solution based on the energy function E2, the search unit 20 may increase the number of candidates for the next state for a certain state, as compared with a case where the energy function E1 corresponding to the original problem matrix is used. For example, the original state is assumed to be the state 31 represented by the permutation (1, 2, 3, 4, 5). In this case, candidates for the next state are (2, 1, 3, 4, 5), (4, 2, 3, 1, 5), (1, 3, 2, 4, 5), (1, 4, 3, 2, 5), (1, 2, 4, 3, 5), (1, 2, 3, 5, 4), (1, 2, 5, 4, 3), (1, 5, 3, 4, 2), and (5, 2, 3, 4, 1).

Among the candidates, a state represented by the permutation (1, 5, 3, 4, 2) is equivalent to a state represented by (1, 3, 4, 2). A state represented by (5, 2, 3, 4, 1) is equivalent to a state represented by (2, 3, 4, 1). For the permutation (1, 3, 4, 2), the number of different elements with respect to the permutation (1, 2, 3, 4) is 3. For example, the state of the permutation (1, 3, 4, 2) is a state in which values of the six state variables are changed from a state of the permutation (1, 2, 3, 4). For the permutation (2, 3, 4, 1), the number of different elements with respect to the permutation (1, 2, 3, 4) is 4. For example, the state of the permutation (2, 3, 4, 1) is a state in which values of the eight state variables are changed from the state of the permutation (1, 2, 3, 4). By introducing the redundant element, a change in value of more than 4 state variables, for example, a state transition equivalent to a multi-bit transition may be implemented.

In this manner, since the search unit 20 uses the energy function E2, it is possible to increase the number of candidates for the state of the next transition destination satisfying a constraint for a certain state, as compared with a case where the energy function E1 corresponding to the original problem matrix is used, and thus it is difficult to fall into a local solution. After the search for the solution based on the energy function E2 is performed for a predetermined period, the search unit 20 outputs a solution having the lowest energy among the solutions obtained by the search, for example, a first solution 40, to the processing unit 12.

The processing unit 12 stores the first solution 40 obtained from the search unit 20 in the storage unit 11. For example, it is assumed that the first solution 40 is in a state represented by the permutation (5, 2, 3, 4, 1). From the first solution 40, the processing unit 12 generates a second solution 41 by removing $5^2-4^2 = 9$ state variables corresponding to the redundant element "5". The redundant element "5" is located at a head of the permutation (5, 2, 3, 4, 1). Accordingly, for example, the processing unit 12 generates the second solution 41 by removing 9 state variables belonging to the first row and the fifth column, from the first solution 40. The second solution 41 corresponds to the permutation (2, 3, 4, 1). The second solution 41 is a solution to the permutation optimization problem represented by a total of 16 state variables having the original four rows and four columns.

As described above, the search unit 20 may calculate the energy change amounts in parallel for all the transition destination candidates for a certain state, and randomly select one of the transition destination candidates satisfying the determination criterion of Equation (5) or Equation (6) as the next transition destination.

A position of the redundant element may be an arbitrary position. For example, the processing unit 12 may treat an element "3" in the permutation (1, 2, 3, 4, 5) in an initial state as a redundant element. In this case, for example, all rows and columns of 0 are set in the third row and the third column of the problem matrix A extended to 5 rows and 5 columns, and an energy function is defined. Alternatively, the processing unit 12 may treat, for example, the element "5" in the permutation (2, 3, 1, 5, 4) in the initial state as the redundant element. In this case, for example, all rows and columns of 0 are set in the fourth row and the fifth column of the problem matrix A extended to 5 rows and 5 columns, and an energy function is defined.

As described above, with the information processing apparatus 10, problem information indicating $M^2$ state variables corresponding to the permutation optimization problem is acquired. Based on the problem information, information of the energy function E2 including $N^2$ state variables obtained by adding ($N^2-M^2$) state variables (N is an integer more than M) to $M^2$ state variables is generated and input to the search unit 20. The search unit 20 searches for a first solution by repeatedly performing a process of changing values of four state variables in accordance with a change amount of a value of the energy function E2 in a case where the values of the four state variables are changed so as to satisfy a constraint in which a sum of values of state variables included in each row is 1 and a sum of values of state variables included in each column is 1 when $N^2$ state variables are arranged in N rows and N columns. The first solution is represented by values of $N^2$ state variables. The first solution obtained by the search unit 20 is acquired, and values of ($N^2-M^2$) state variables are removed from the first solution, so that a second solution for the permutation optimization problem is generated.

Therefore, the information processing apparatus 10 may improve solution-searching performance. For example, the processing unit 12 causes the search unit 20 to execute a search for a solution based on the energy function E2, so that the number of candidates for the next state for a certain state is increased. For this reason, the search unit 20 is unlikely to fall into a local solution.

For example, in a case where the state variable corresponding to the redundant element is not introduced, when the local solution is reached, it is also considered that escape from the local solution is attempted by performing an operation of changing values of more state variables than four state variables at one time in the search unit 20. Meanwhile, as the number of state variables changed at one time is larger, the calculation of the energy change amount and the local field is more complicated, and an operation cost is higher. For example, in a case where the search unit 20 is implemented by an electronic circuit such as an FPGA, complication of a circuit for the operation also becomes a problem.

By contrast, the information processing apparatus 10 causes the search unit 20 to perform a state transition based on the energy function E2 in which a redundant element is introduced, so that there is an advantage that more various states may be set as transition destination candidates from a certain state only by changing values of four state variables. By introducing the redundant element, equivalently, the information processing apparatus 10 may also cause the search unit 20 to perform a multi-bit transition that is impossible by an existing mechanism, for example, an operation of simultaneously transitioning a larger number of state variables than 4 to transition. For example, the information processing apparatus 10 may easily improve the solution-searching performance of the search unit 20 by using the existing function of the search unit 20. The function of the information processing apparatus 10 may be applied to, for example, a permutation optimization problem such as an LOP in which only a correlation of permutation elements is a problem.

[Second Embodiment]

Next, a second embodiment will be described.

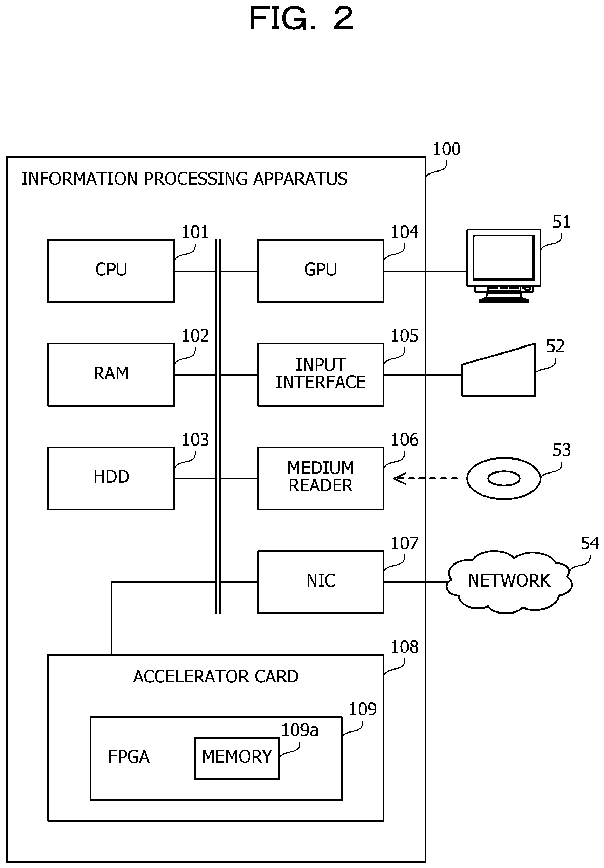

FIG. 2 is a diagram illustrating a hardware example of an information processing apparatus according to a second embodiment.

The information processing apparatus 100 searches for a solution to a combinatorial optimization problem by using an MCMC method, and outputs the searched solution. The information processing apparatus 100 includes a CPU 101, a RAM 102, a hard disk drive (HDD) 103, a GPU 104, an input interface 105, a medium reader 106, a network interface card (NIC) 107, and an accelerator card 108. The CPU 101 is an example of the processing unit 12 of the first embodiment. The RAM 102 or the HDD 103 is an example of the storage unit 11 according to the first embodiment.

The CPU 101 is a processor that executes a command of a program. The CPU 101 loads at least a part of a program or data stored in the HDD 103 into the RAM 102, and executes the program. The CPU 101 may include a plurality of processor cores. The information processing apparatus 100 may have a plurality of processors. Processes described below may be executed in parallel by using a plurality of processors or processor cores. A set of the plurality of processors may be referred to as a "multiprocessor" or merely referred to as a "processor".

The RAM 102 is a volatile semiconductor memory that temporarily stores the program executed by the CPU 101 or data used for an operation by the CPU 101. The information processing apparatus 100 may include memories of types other than the RAM, and may include a plurality of memories.

The HDD 103 is a non-volatile storage device that stores data as well as programs of software such as an operating system (OS), middleware, or application software. The information processing apparatus 100 may include other types of storage devices such as a flash memory and a solid-state drive (SSD), and may include a plurality of non-volatile storage devices.

The GPU 104 outputs an image to a display 51 coupled to the information processing apparatus 100 in accordance with a command from the CPU 101. An arbitrary type of a display such as a cathode ray tube (CRT) display, a liquid crystal display (LCD), a plasma display, or an organic electro-luminescence (OEL) display may be used as the display 51.

The input interface 105 acquires an input signal from an input device 52 coupled to the information processing apparatus 100, and outputs the input signal to the CPU 101. As the input device 52, a pointing device such as a mouse, a touch panel, a touchpad, or a trackball, a keyboard, a remote controller, a button switch, or the like may be used. A plurality of types of input devices may be coupled to the information processing apparatus 100.

The medium reader 106 is a reading device that reads a program or data recorded in a recording medium 53. As the recording medium 53, for example, a magnetic disk, an optical disk, a magneto-optical (MO) disk, a semiconductor memory, or the like may be used. The magnetic disk includes a flexible disk (FD) or an HDD. The optical disk includes a compact disc (CD) or a Digital Versatile Disc (DVD).

For example, the medium reader 106 copies a program or data read from the recording medium 53 into another recording medium such as the RAM 102 or the HDD 103. The read program is executed by, for example, the CPU 101. The recording medium 53 may be a portable recording medium, and may be used to distribute the program and the data. The recording medium 53 and the HDD 103 will be referred to as computer readable recording medium in some cases.

The NIC 107 is an interface that is coupled to a network 54, and communicates with another computer via the network 54. The NIC 107 is coupled to, for example, a communication device such as a switch or a router through a cable. The NIC 107 may be a wireless communication interface.

The accelerator card 108 is a hardware accelerator that searches for a solution to a problem represented by an Ising-type energy function of Equation (1) by using the MCMC method. By performing the MCMC method at a certain temperature or the replica exchange method in which the states of the Ising model are exchanged among a plurality of temperatures, the accelerator card 108 may be used as a sampler that samples a state following a Boltzmann distribution at the corresponding temperature. In order to search for a solution to the combinatorial optimization problem, the accelerator card 108 executes an annealing process such as the replica exchange method or the SA method in which a temperature value is gradually decreased.

The SA method is a method of efficiently finding an optimum solution by sampling a state according to the Boltzmann distribution at each temperature value and decreasing the temperature value used for sampling from a high temperature to a low temperature, for example, increasing an inverse temperature β. Since the state is changed to some extent even in a case where the low temperature side, for example, β is large, there is a high possibility that an appropriate solution may be found even though the temperature value is decreased rapidly. For example, in a case where the SA method is used, the accelerator card 108 repeats an operation of decreasing the temperature value after repeating a trial of state transition a certain number of times at a certain temperature value.

The replica exchange method is a method in which the MCMC method is independently executed using a plurality of temperature values, and temperature values are exchanged as appropriate for states obtained at the respective temperature values. By searching in a narrow range of a state space by the MCMC method at a low temperature and searching in a wide range of the state space by the MCMC method at a high temperature, it is possible to efficiently find an appropriate solution. For example, in a case where the replica exchange method is used, the accelerator card 108 performs the trial of the state transition at each of the plurality of temperature values in parallel, an operation of exchanging temperature values at a predetermined exchange probability for a state obtained at each temperature value, every time a certain number of trials are performed, is repeated.

The accelerator card 108 has an FPGA 109. The FPGA 109 implements a solution search function in the accelerator card 108. The solution search function may be implemented by another type of electronic circuit such as a GPU or an ASIC. The FPGA 109 includes a memory 109a. The memory 109a holds problem data used for searches in the FPGA 109 or solutions searched in the FPGA 109. The memory 109a is, for example, a static random-access memory (SRAM). The FPGA 109 may include a plurality of memories including the memory 109a. The FPGA 109 may include a plurality of memories including the memory 109a. The accelerator card 108 may have a RAM outside the FPGA 109, and may temporarily save data stored in the memory 109a into the RAM, in accordance with the process of the FPGA 109.

A hardware accelerator that searches for a solution to a problem having an Ising form, such as the accelerator card 108, may be referred to as an Ising machine, a Boltzmann machine, or the like.

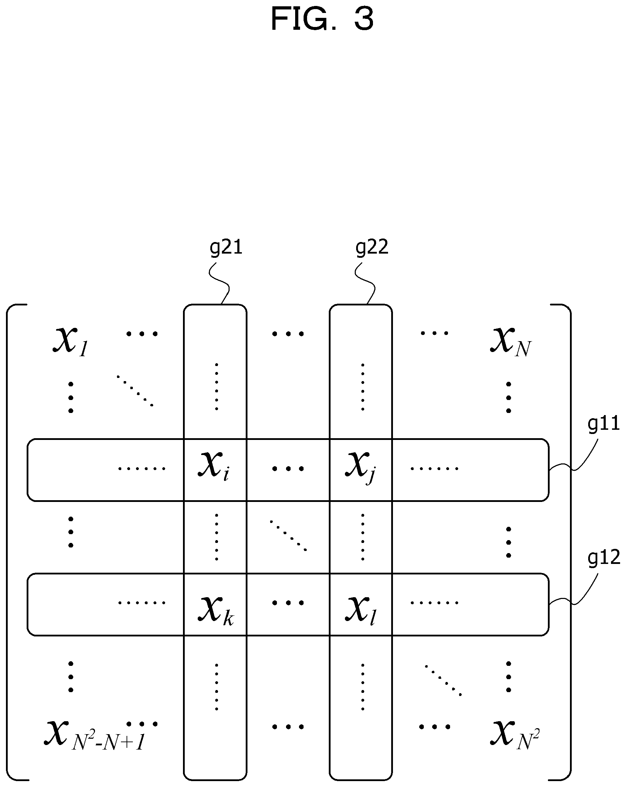

FIG. 3 is a diagram illustrating a bit flip control example with 2-Way 1-Hot.

A constraint condition called a 2-Way 1-Hot constraint may be imposed in a combinatorial optimization problem. The combinatorial optimization problem with 2-Way 1-Hot constraint is referred to as a permutation optimization problem. 2-Way 1-Hot is abbreviated as 2W1H.

A 1-Hot constraint is a constraint in which "there is only one variable having a value" 1 "in a certain set of state variables". For example, FIG. 3 illustrates $N^2$ (where N is an integer equal to or more than 4) state variables $x_1$, $x_2$, ... in N rows and N columns. Groups g11 and g12 indicate examples of groups of state variables corresponding to rows. Groups g21 and g22 indicate examples of groups of state variables corresponding to columns. In a case where the 1-Hot constraint is applied to groups of state variables corresponding to each row, a sum of the state variables of each row is equal to 1. For example, a sum of the state variables belonging to the group g11 is equal to 1. A sum of the state variables belonging to the group g12 is equal to 1. Alternatively, in a case where the 1-Hot constraint is applied to groups of state variables corresponding to each column, a sum of the state variables of each column is equal to 1. For example, a sum of the state variables belonging to the group g21 is equal to 1. A sum of the state variables belonging to the group g22 is equal to 1.

According to 2W1H, values of 4 state variables are changed by one operation so as to satisfy two 1-Hot constraints. For example, 4-bit flips as represented in Equation (7) are acquired. i, j, k, and l are a set of indices indicating a set of state variables to be flipped. i < j < k < l is obtained. FIG. 3 illustrates an example of a set of state variables corresponding to the indices i, j, k, and l. In 2W1H, the number of state variables is $N^2$, and each state variable is grouped as a group on which the 1-Hot constraint is imposed in each of N rows and each of N columns. The energy change $\Delta E_j$ in this case is represented by Equation (8). The change amount $\Delta h_m$ of a local field corresponding to the state variable $x_m$ is represented by Equation (9). m = 1, 2, ..., and $N^2$.

In the following, as an example of the permutation optimization problem, an LOP will be described. Meanwhile, the permutation optimization problem to be processed by the information processing apparatus 100 may be a permutation optimization problem other than the LOP in which only a correlation of permutation elements is a problem.

For example, Cost E indicating a cost in the LOP may be represented by Equation (19).

$$\text{Cost } E = -\sum_{i=1}^{n}\sum_{j=1}^{n}\sum_{k=1}^{n}\sum_{l=1}^{n} f_{ij}a_{kl}x_{ik}x_{jl} \qquad (19)$$

A value of a variable $x_{ik}$ in Equation (19) is represented by Equation (20).

$$x_{ik} = \begin{cases} 1 & : i \text{ is permuted to } k(= \pi(i)) \\ 0 & : \text{otherwise} \end{cases} \tag{20}$$

The problem matrix A is represented by Equation (21). A matrix F giving $f_{ij}$ is represented by Equation (22). In the matrix F of Equation (22), all elements above diagonal elements are -1, and all the other elements are 0.

$$\mathbf{A} = \begin{pmatrix} a_{11} & a_{12} & \cdots & a_{1n} \\ a_{21} & a_{22} & \cdots & a_{2n} \\ \vdots & \vdots & \ddots & \vdots \\ a_{n1} & a_{n2} & \cdots & a_{nn} \end{pmatrix} \tag{21}$$

$$\mathbf{F} = - \begin{pmatrix} 0 & 1 & \cdots & 1 \\ 0 & 0 & \cdots & 1 \\ \vdots & \vdots & \ddots & \vdots \\ 0 & 0 & \cdots & 0 \end{pmatrix} \tag{22}$$

An Ising-type energy function E giving Cost E of Equation (19) is represented by Equation (23).

$$E = -\frac{1}{2}{}^{\mathrm{t}}\mathbf{x} \cdot \mathbf{W} \cdot \mathbf{x} \tag{23}$$

x in Equation (23) is a state vector indicating a state of the Ising model. W in Equation (23) is a weight coefficient matrix calculated by Equation (17).

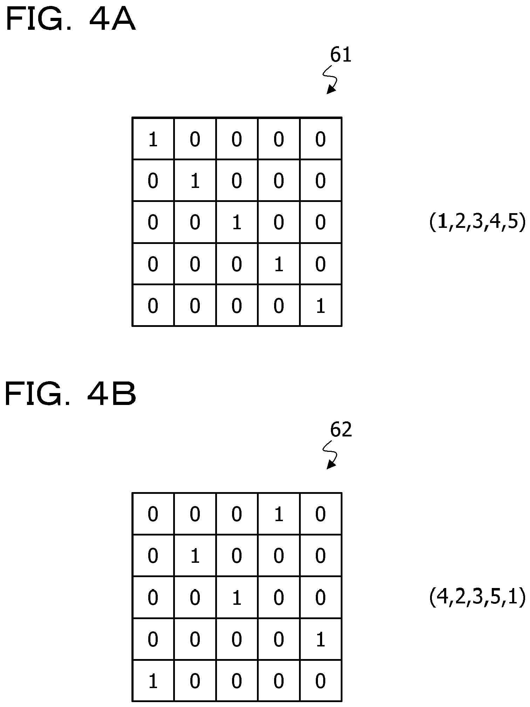

FIGs. 4A and 4B are diagrams illustrating an example of a correspondence relationship between a state and a permutation of an Ising model.

FIG. 4A illustrates an example of a state 61 of the Ising model in a case of N = 5. FIG. 4B illustrates a state 62 of the Ising model in a case of N = 5. Each of the states 61 and 62 is represented by 25 state variables $x_1$ to $x_{25}$. A first row of a matrix indicated by each of the states 61 and 62 is a group of the state variables $x_1$ to $x_5$. A second row is a group of the state variables $x_6$ to $x_{10}$. A third row is a group of the state variables $x_{11}$ to $x_{15}$. A fourth row is a group of the state variables $x_{16}$ to $x_{20}$. A fifth row is a group of the state variables $x_{21}$ to $x_{25}$. Each state variable is also grouped in a column direction.

In the example of the state 61, values of the state variables of each group in a row direction are as follows. $\{x_1, x_2, x_3, x_4, x_5\} = \{1, 0, 0, 0, 0\}$. $\{x_6, x_7, x_8, x_9, x_{10}\} = \{0, 1, 0, 0, 0\}$. $\{x_{11}, x_{12}, x_{13}, x_{14}, x_{15}\} = \{0, 0, 1, 0, 0\}$. $\{x_{16}, x_{17}, x_{18}, x_{19}, x_{20}\} = \{0, 0, 0, 1, 0\}$. $\{x_{21}, x_{22}, x_{23}, x_{24}, x_{25}\} = \{0, 0, 0, 0, 1\}$. In this case, the state 61 is represented as a permutation (1, 2, 3, 4, 5). As described above, for example, a p-th value q from a left of the permutation indicates that an element of a p-th row from a top and a q-th column from a left of the matrix indicated by the state 61, the state 62, or the like is 1.

In the example of the state 62, values of the state variables of each group in a row direction are as follows. $\{x_1, x_2, x_3, x_4, x_5\} = \{0, 0, 0, 1, 0\}$. $\{x_6, x_7, x_8, x_9, x_{10}\} = \{0, 1, 0, 0, 0\}$. $\{x_{11}, x_{12}, x_{13}, x_{14}, x_{15}\} = \{0, 0, 1, 0, 0\}$. $\{x_{16}, x_{17}, x_{18}, x_{19}, x_{20}\} = \{0, 0, 0, 0, 1\}$. $\{x_{21}, x_{22}, x_{23}, x_{24}, x_{25}\} = \{1, 0, 0, 0, 0\}$. In this case, the state 62 is represented by a permutation (4, 2, 3, 5, 1).

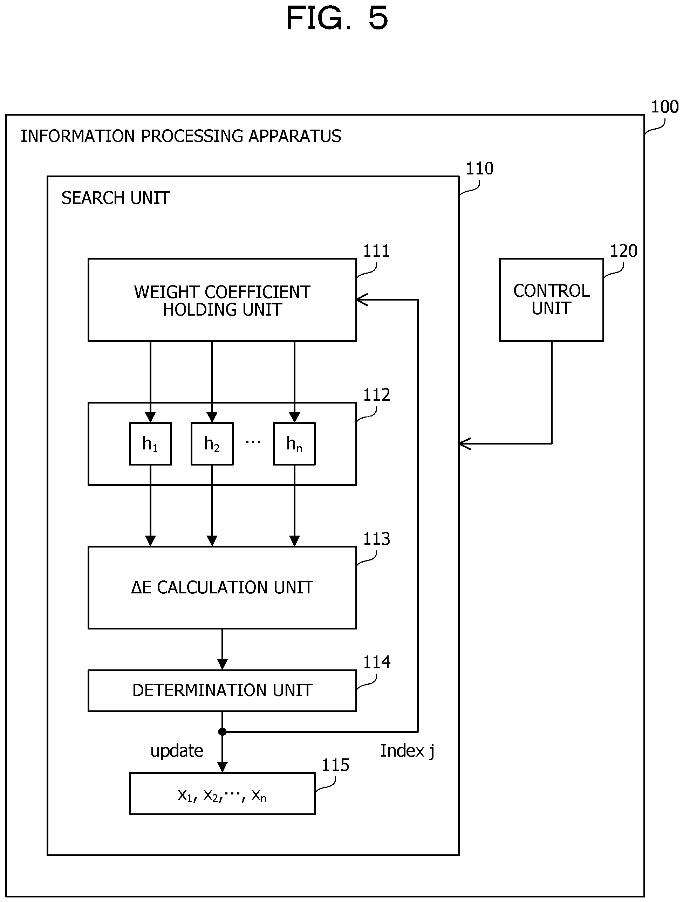

FIG. 5 is a diagram illustrating a functional example of the information processing apparatus.

The information processing apparatus 100 transitions a state of an Ising model so as to satisfy a 2W1H constraint, and efficiently searches for a solution to a permutation optimization problem. The information processing apparatus 100 includes a search unit 110 and a control unit 120. The search unit 110 searches for a solution to an LOP by using an SA method or the like. The control unit 120 controls the search unit 110. The search unit 110 is implemented by the FPGA 109. The control unit 120 is implemented by the CPU 101.

The search unit 110 includes a weight coefficient holding unit 111, a local-field holding unit 112, a ΔE calculation unit 113, a determination unit 114, and a state holding unit 115. The memory 109a is used as a data storage region in the weight coefficient holding unit 111 and the local-field holding unit 112.

The weight coefficient holding unit 111 holds the weight coefficient matrix W in Equation (1). Based on an index j supplied from the determination unit 114, the weight coefficient holding unit 111 supplies weight coefficients $W_{mi}$, $W_{mj}$, $W_{mk}$, and $W_{ml}$ to the local-field holding unit 112.

The local-field holding unit 112 holds the local fields $h_1$, $h_2$, ..., and $h_n$ based on Equation (3). The local-field holding unit 112 updates the local fields $h_1$, $h_2$, ..., and $h_n$ by Equation (9), based on the weight coefficient matrix W held in the weight coefficient holding unit 111 in accordance with a change in values of the four state variables $x_i$, $x_j$, $x_k$, and $x_l$ by 2W1H. n is the number of all the state variables, and $n = N^2$.

The $\Delta E$ calculation unit 113 calculates the energy change $\Delta E_j$ in a case where the values of the state variables $x_i$, $x_j$, $x_k$, and $x_l$ are changed by Equation (8). For a plurality of state variables set as change candidates, the $\Delta E$ calculation unit 113 may calculate a plurality of $\Delta E$ in parallel.

Based on Equation (6), the determination unit 114 determines whether or not the change in values of the four state variables $x_i$, $x_j$, $x_k$, and $x_l$ is allowed. In a case of being allowed, the determination unit 114 changes the values of the four state variables $x_i$, $x_j$, $x_k$, and $x_l$ held in the state holding unit 115, and supplies the indices i, j, k, and l to the weight coefficient holding unit 111. In a case where the plurality of $\Delta E$ are calculated in parallel by the $\Delta E$ calculation unit 113, the determination unit 114 selects any one of a plurality of sets of four state variables of which values are allowed to change, based on Equation (6), and changes values of four state variables belonging to the selected set.

The state holding unit 115 holds the state variables ($x_1$, $x_2$, ..., and $x_n$). By integrating $\Delta E$ in accordance with the state transition with respect to energy in an initial state, the state holding unit 115 may hold the energy corresponding to the current state.

The control unit 120 generates information on an energy function obtained by introducing a redundant element to an energy function corresponding to an original problem, and sets the information in the search unit 110. For example, the control unit 120 converts the problem matrix A having M rows and M columns given as the LOP into a problem matrix having N rows and N columns as represented by Equation (18), and generates the weight coefficient matrix W by using Equation (17) for the problem matrix A after the conversion. The problem matrix after the conversion has N rows and N columns. In this case, the weight coefficient matrix W calculated by Equation (17) is a symmetric matrix of $N^2$ rows and $N^2$ columns. The control unit 120 adds ($N^2$-$M^2$) state variables to $M^2$ state variables given as the LOP, and extends the state variables to $N^2$ state variables. The control unit 120 generates information on the energy function into which the redundant element is introduced in this manner, inputs the information to the search unit 110, and causes the search unit to execute a search for a solution.

The control unit 120 acquires a solution obtained as a result of the search by the search unit 110, removes ($N^2$-$M^2$) state variables from the solution, and returns the solution to the $M^2$ state variables. For example, the control unit 120 generates a solution represented by the $M^2$ state variables as a solution to the given LOP. The control unit 120 outputs the generated solution.

For example, Japanese Laid-open Patent Publication No. 2021-157361 is a reference for a search for a solution by 2W1H in the search unit 110.

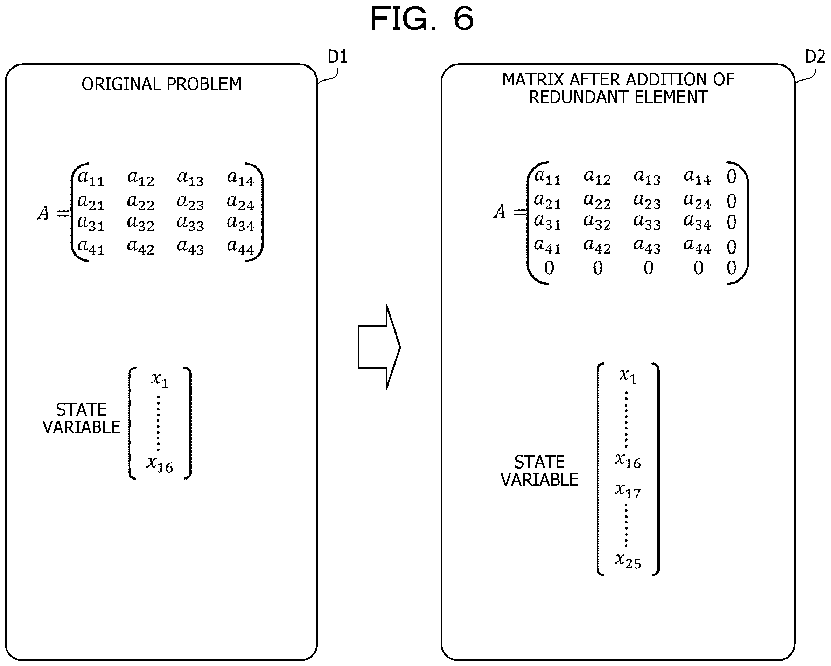

FIG. 6 is a diagram illustrating an example of a method of adding a redundant element in an LOP.

As an example, it is assumed that an original problem is represented by using 16 state variables $x_1$ to $x_{16}$. Problem information D1 indicates the problem matrix A and the state variables ($x_1$, ..., and $x_{16}$) corresponding to the original problem. The problem matrix A is a matrix of 4 rows and 4 columns.

Problem information D2 indicates the problem matrix A and the state variables ($x_1$, ..., and $x_{25}$) after a redundant element is added. The problem matrix A to which the redundant element is added is a matrix having 5 rows and 5 columns. Each element in the fifth row and each element in the fifth column of the problem matrix A after adding the redundant element are both 0. The problem matrix A to which the redundant element is added is referred to as an extension matrix. By using the extension matrix, the control unit 120 generates the weight coefficient matrix W by using Equation (17). The state variables $x_1$ to $x_{25}$ are obtained by adding 9 state variables to the original 16 state variables $x_1$ to $x_{16}$. The state variable added to the original state variable is referred to as a redundant variable.

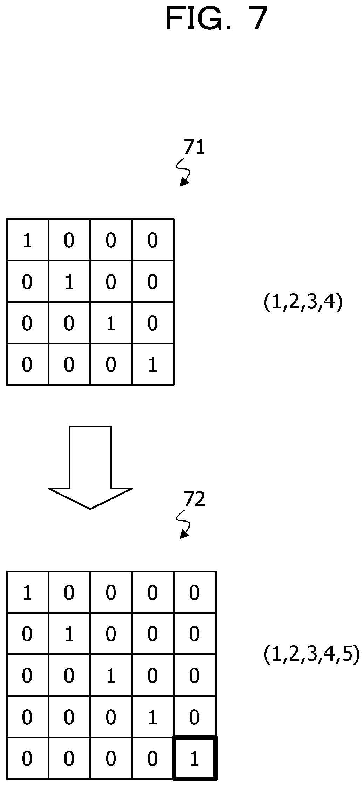

FIG. 7 is a diagram illustrating an example of adding a redundant variable.

In the example illustrated in FIG. 6, the 16 state variables $x_1$ to $x_{16}$ in the original problem indicate a state 71. For example, $\{x_1, x_2, x_3, x_4\} = \{1, 0, 0, 0\}$, $\{x_5, x_6, x_7, x_8\} = \{0, 1, 0, 0\}$, $\{x_9, x_{10}, Xn, x_{12}\} = \{0, 0, 1, 0\}$, and $\{x_{13}, x_{14}, x_{15}, x_{16}\} = \{0, 0, 0, 1\}$ is obtained. In this case, the state 71 is represented by a permutation (1, 2, 3, 4).

After a redundant element "5" is added, 25 state variables $x_1$ to $x_{25}$ indicate a state 72. For example, $\{x_1, x_2, x_3, x_4, x_5\} = \{1, 0, 0, 0, 0\}$, $\{x_6, x_7, x_8, x_9, x_{10}\} = \{0, 1, 0, 0, 0\}$, $\{x_{11}, x_{12}, x_{13}, x_{14}, x_{15}\} = \{0, 0, 1, 0, 0\}$, $\{x_{16}, x_{17}, x_{18}, x_{19}, x_{20}\} = \{0, 0, 0, 1, 0\}$, and $\{x_{21}, x_{22}, x_{23}, x_{24}, x_{25}\} = \{0, 0, 0, 0, 1\}$ is obtained. In this case, the state 72 is represented by a permutation (1, 2, 3, 4, 5).

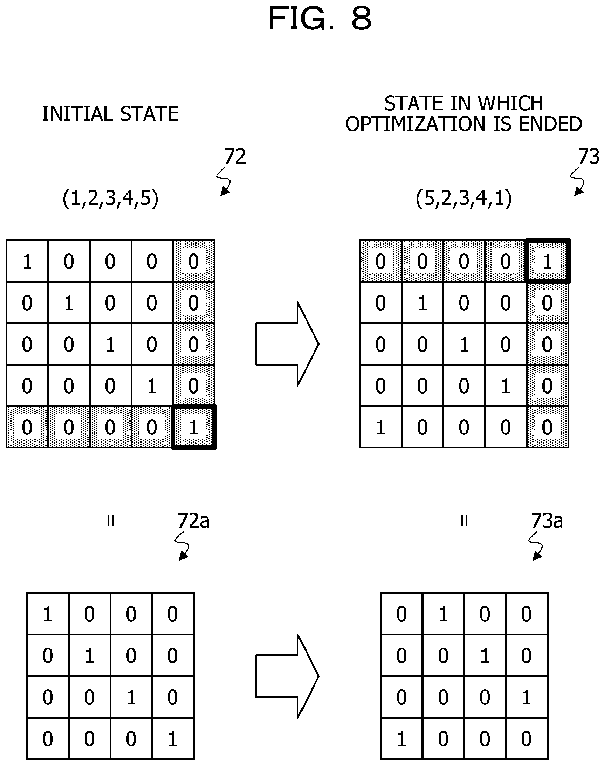

FIG. 8 is a diagram illustrating an acquisition example of a solution by a control unit.

For example, the control unit 120 sets an initial state to the state 72 and causes the search unit 110 to search for a solution, for example, to execute an optimization process. The state 72 is equivalent to a state 72a from which a redundant element "5" is removed. For example, the control unit 120 acquires a state 73 in which the optimization is ended from the search unit 110. The state 73 corresponds to a solution obtained as a search result of the search unit 110.

The state 73 is $\{x_1, x_2, x_3, x_4, x_5\} = \{0, 0, 0, 0, 1\}$, $\{x_6, x_7, x_8, x_9, x_{10}\} = \{0, 1, 0, 0, 0\}$, $\{x_{11}, x_{12}, x_{13}, x_{14}, x_{15}\} = \{0, 0, 1, 0, 0\}$, $\{x_{16}, x_{17}, x_{18}, x_{19}, x_{20}\} = \{0, 0, 0, 1, 0\}$, and $\{x_{21}, x_{22}, x_{23}, x_{24}, x_{25}\} = \{1, 0, 0, 0, 0\}$. In this case, the state 73 corresponds to a permutation (5, 2, 3, 4, 1). By removing 9 state variables $x_1, x_2, x_3, x_4, x_5, x_{10}, x_{15}, x_{20}$, and $x_{25}$ corresponding to the redundant element "5" from the state 73, the control unit 120 generates a state 73a corresponding to a solution to an LOP to be solved. The state 73a corresponds to a permutation (2, 3, 4, 1).

For the permutation (5, 2, 3, 4, 1) including the redundant element "5", the permutations (2, 5, 3, 4, 1), (2, 3, 5, 4, 1), (2, 3, 4, 5, 1), and (2, 3, 4, 1, 5) are in a state in which energies of the permutations are equivalent. Any of the permutations including the redundant element "5" is equivalent to the permutation (2, 3, 4, 1).

In this manner, the control unit 120 generates the weight coefficient matrix W by using Equation (17) for the extension matrix A of Equation (18). Even when the redundant element "5" is at any position with respect to a certain arrangement of element "1, 2, 3, 4" other than the redundant element "5" in the above-described permutation, energies for values of the $N^2$ state variables corresponding to the permutation are the same. For example, it is assumed that the certain arrangement of the elements "1, 2, 3, 4" other than the redundant element "5" is (2, 3, 4, 1). In this case, for example, as described above, the energy for the state of the permutation (5, 2, 3, 4, 1) in which the redundant element "5" is before the element "2" and the energy corresponding to the state of the permutation (2, 5, 3, 4, 1) in which the redundant element "5" is between the elements "2, 3" are also the same.

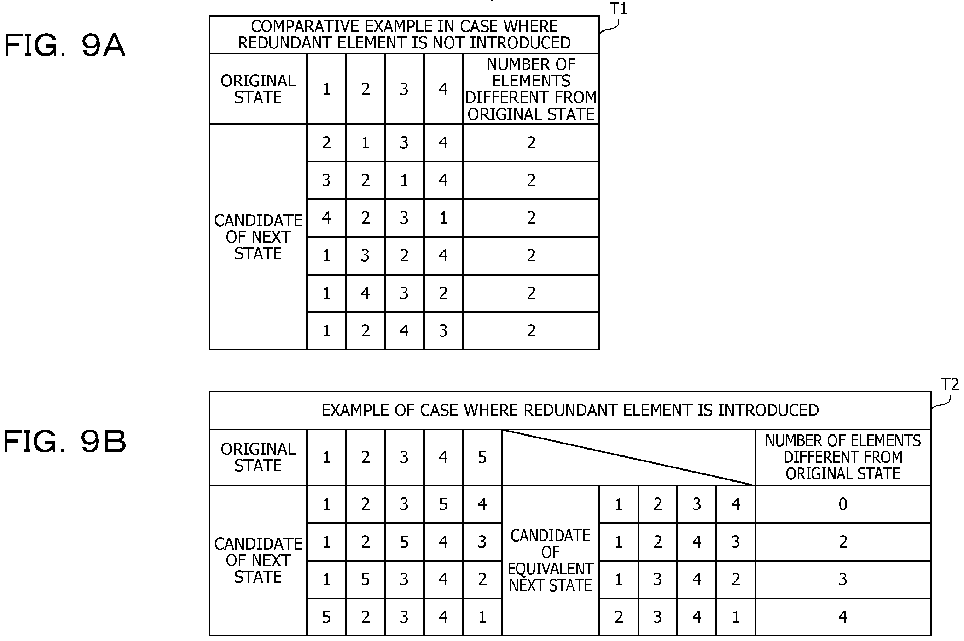

FIGs. 9A and 9B are diagrams illustrating an example of a state transition destination candidate according to the presence or absence of a redundant element.

FIG. 9A illustrates a table T1 of a comparative example of state transition destination candidates in a case where a redundant element is not introduced. FIG. 9B illustrates a table T2 of an example of state transition destination candidates in a case where the redundant element is introduced.

An original state in the table T1 corresponds to a permutation (1, 2, 3, 4). An original state in the table T2 corresponds to a permutation (1, 2, 3, 4, 5) obtained by introducing a redundant element "5" into the permutation (1, 2, 3, 4).

With the table T1, candidates of the next state for the original state permutation (1, 2, 3, 4) are (2, 1, 3, 4), (3, 2, 1, 4), (4, 2, 3, 1), (1, 3, 2, 4), (1, 4, 3, 2), and (1, 2, 4, 3). For all of these candidates, the number of elements different from the permutation (1, 2, 3, 4) of the original state is 2. For example, in a case where no redundant element is introduced, the candidate for the next state is only a state reached by a 4-bit transition of changing values of four state variables from the original state.

Candidates for a case where the redundant element "5" is moved are described as candidates for the next state for the original state permutation (1, 2, 3, 4, 5) in the table T2, and illustration of the other candidates is omitted. With the table T2, there are (1, 2, 3, 5, 4), (1, 2, 5, 4, 3), (1, 5, 3, 4, 2), and (5, 2, 3, 4, 1) for candidates of the next state for the permutation (1, 2, 3, 4, 5) in the original state.

The permutation (1, 2, 3, 5, 4) is equivalent to the permutation (1, 2, 3, 4). The permutation (1, 2, 5, 4, 3) is equivalent to the permutation (1, 2, 4, 3). The permutation (1, 5, 3, 4, 2) is equivalent to the permutation (1, 3, 4, 2). The permutation (5, 2, 3, 4, 1) is equivalent to the permutation (2, 3, 4, 1).

For the permutation (1, 2, 3, 4), the number of elements different from the elements of the original permutation (1, 2, 3, 4) in which no redundant element is introduced is 0. For the permutation (1, 2, 4, 3), the number of elements different from the elements of the original permutation (1, 2, 3, 4) is 2. For the permutation (1, 3, 4, 2), the number of elements different from the elements of the original permutation (1, 2, 3, 4) is 3. For the permutation (2, 3, 4, 1), the number of elements different from the elements of the original permutation (1, 2, 3, 4) is 4.

In this case, the state represented by the permutation (1, 3, 4, 2) is a state reached by a 6-bit transition of changing the values of 6 state variables from the original state. The state represented by the permutation (2, 3, 4, 1) is a state reached by an 8-bit transition of changing the values of 8 state variables from the original state. In this manner, by introducing the redundant element into the permutation, the control unit 120 may cause the search unit 110 to search for a state that is equivalently separated by 4 bits or more as a transition destination state while operating the search unit 110 with a trial mechanism of replacing two elements in the existing permutation.

For example, a case where the element "5" in the permutation (2, 3, 1, 5, 4) in an initial state is set as the redundant element is also conceivable. In this case, the control unit 120 may set all the elements of the fourth row and the fifth column to 0 in the problem matrix A extended to 5 rows and 5 columns, for example.

Next, a process procedure of the information processing apparatus 100 will be described.

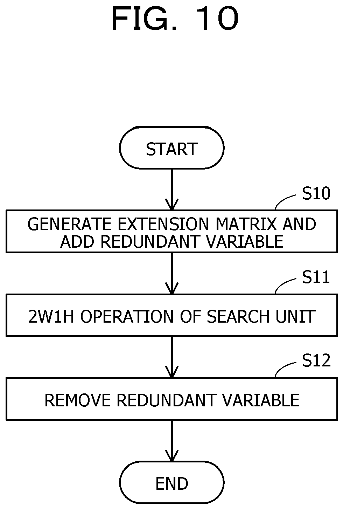

FIG. 10 is a flowchart illustrating a process example of the information processing apparatus.

(S10) The control unit 120 generates the extension matrix A based on input problem information. The control unit 120 adds a redundant variable to a state variable group indicated by the problem information. The control unit 120 calculates the weight coefficient matrix W by using the extension matrix A, and generates information on an energy function related to the state variable group to which the weight coefficient matrix W and the redundant variable are added. The control unit 120 inputs the information on the energy function to the search unit 110, and causes the search unit to start a search for a solution based on the energy function.

(S11) The search unit 110 searches for the solution by using an SA method, a replica exchange method, or the like in a 2W1H operation. After the search is ended, the search unit 110 outputs a solution having the lowest energy obtained by the search to the control unit 120.

(S12) The control unit 120 generates a solution to a permutation optimization problem related to the input problem information by removing the redundant variable corresponding to a redundant element from the solution acquired from the search unit 110. The control unit 120 outputs the generated solution. The process of the information processing apparatus 100 is ended.

As described above, the control unit 120 may improve solution-searching performance of the search unit 110 by introducing the redundant element. For example, the control unit 120 may increase the number of candidates for the next state for a certain state in the search by the search unit 110. For this reason, the search unit 110 is unlikely to fall into a local solution.

For example, in a case where the state variable corresponding to the redundant element is not introduced, when the local solution is reached, it is also considered that escape from the local solution is attempted by performing an operation of changing values of more state variables than four state variables at one time in the search unit 110. Meanwhile, as the number of state variables changed at one time is larger, the calculation of the energy change amount and the local field is more complicated, and an operation cost is higher. For example, in a case where the search unit 110 is implemented by an electronic circuit such as an FPGA, complication of a circuit for the operation also becomes a problem.

By contrast, the control unit 120 causes the search unit 110 to perform a state transition based on the energy function in which a redundant element is introduced, so that more various states may be set as transition destination candidates from a certain state only by changing values of four state variables. By introducing the redundant element, equivalently, the control unit 120 may also cause the search unit 110 to perform a multi-bit transition that is impossible by an existing mechanism, for example, an operation of simultaneously transitioning a larger number of state variables than 4. Accordingly, the information processing apparatus 100 may easily improve the solution-searching performance of the search unit 110 by using the existing function of the search unit 110.

[Third Embodiment]

Next, a third embodiment will be described. Items different from the above-described second embodiment will be mainly discussed below while omitting explanations of the common items.

With the third embodiment, the information processing apparatus 100 makes the number of redundant elements to be introduced in a permutation variable.

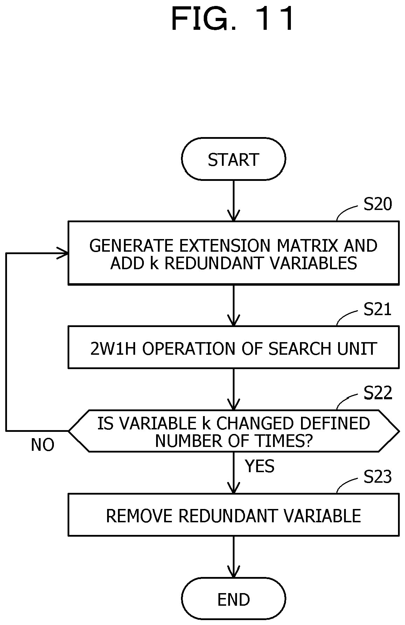

FIG. 11 is a flowchart illustrating a process example of an information processing apparatus according to a third embodiment.

(S20) The control unit 120 generates the extension matrix A based on input problem information. The control unit 120 adds k redundant variables to a state variable group indicated by the problem information. The extension matrix is generated in accordance with the number of redundant elements in the permutation introduced by addition of the redundant variable. For example, in a case where the redundant variable is added such that two redundant elements are added to an end of the permutation, two rows and two columns having values of all 0 are added to an end of the original problem matrix A in an LOP. For example, the control unit 120 sets the number of redundant variables to be added at first to 0, and then increases a value of k every time step S20 is executed.

The control unit 120 calculates the weight coefficient matrix W by using the extension matrix A, and generates information on an energy function related to the state variable group to which the weight coefficient matrix W and the redundant variable are added. The control unit 120 inputs the information on the energy function to the search unit 110, and causes the search unit to start a search for a solution based on the energy function.

(S21) The search unit 110 searches for the solution by using an SA method, a replica exchange method, or the like in a 2W1H operation. After the search is ended, the search unit 110 outputs a solution having the lowest energy obtained by the search to the control unit 120.

(S22) The control unit 120 determines whether or not the variable k is changed by a defined number of times. In a case where the variable k is changed the defined number of times, the process proceeds to step S23. In a case where the variable k is not changed the defined number of times, the process proceeds to step S20.

(S23) The control unit 120 removes the redundant variable of a solution having the lowest energy among the solutions acquired from the search unit 110 to generate a solution to the permutation optimization problem related to the input problem information. The control unit 120 outputs the generated solution. The process of the information processing apparatus 100 is ended.

In this manner, the control unit 120 may increase a value of N in stages by adding k redundant variables. For example, in a case where k redundant variables are added such that the state variable has N rows and N columns, k = 2N-1. Accordingly, when k redundant variables are added, N = (k+1)/2 is obtained. As described above, the control unit 120 may increase the value of N in stages, cause the search unit 110 to execute a search of a solution for each value of N, remove the redundant variable from the most appropriate solution among the solutions obtained by the search unit 110, and acquire a final solution.

The control unit 120 may acquire the lowest energy obtained by executing step S21 for a certain time, and select whether to increase or decrease k in step S22 depending on whether or not the lowest energy is improved from the lowest energy obtained so far.

For example, it is assumed that the lowest energy obtained when step S21 is first executed with k = 0 is set to E(0). Next, the lowest energy obtained when step S21 is executed by increasing the redundant variables by k for the first time is set to E(1). In a case of E(1) < E(0) in step S21, for example, improvement, the control unit 120 further increases k in the second and subsequent times, and additionally tries k redundant variables. At a stage in which E(n+1) > E(n) is satisfied in step S22, the control unit 120 may proceed to step S23. In this case, the control unit 120 generates a final solution by removing the redundant variable from a solution corresponding to E(n).

In this manner, by making the number of redundant elements to be introduced in a permutation variable, the information processing apparatus 100 may increase a possibility of searching for various states and improve solution-searching performance of the search unit 110.

[Fourth Embodiment]

Next, a fourth embodiment will be described. Items different from the above-described second and third embodiments will be mainly discussed below while omitting the explanations of the common items.

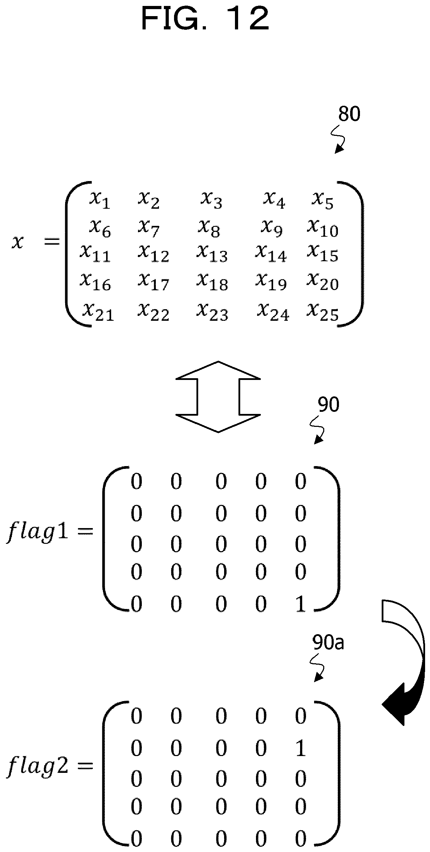

FIG. 12 illustrates an example of a redundant variable flag according to the fourth embodiment.

As an example, a case where one redundant element "5" is added to a permutation (1, 2, 3, 4) of four elements is described. At an initial state, the redundant element "5" is added to an end of the permutation. For example, the permutation (1, 2, 3, 4) is extended to a permutation (1, 2, 3, 4, 5). At this time, the permutation is formulated such that no difference in energy occurs between the two. For example, in a case of an LOP, in the expansion as illustrated in FIG. 6, the difference in energy does not occur.

Regarding a state variable, redundant variables ($x_{17}$, $x_{18}$, ..., and $x_{25}$) are added to original state variables ($x_1$, $x_2$, ..., and $x_{16}$).

A state 80 is represented by a matrix of 5 rows and 5 columns by 25 state variables. In the state 80, a first row is $x_1$ to $x_5$, a second row is $x_6$ to $x_{10}$, a third row is $x_{11}$ to $x_{15}$, a fourth row is $x_{16}$ to $x_{20}$, and a fifth row is $x_{21}$ to $x_{25}$.

At this time, a value of a redundant variable flag is given so as to know where the redundant element "5" is in the permutation. Redundant variable flag information 90 (= flag1) indicates a value of the redundant variable flag of each state variable in an initial stage.

By a state transition by the search unit 110, the redundant element "5" is moved and in, for example, a state of a permutation (3, 5, 2, 1, 4). Redundant variable flag information 90a (= flag2) indicates the value of the redundant variable flag of each state variable at this time.

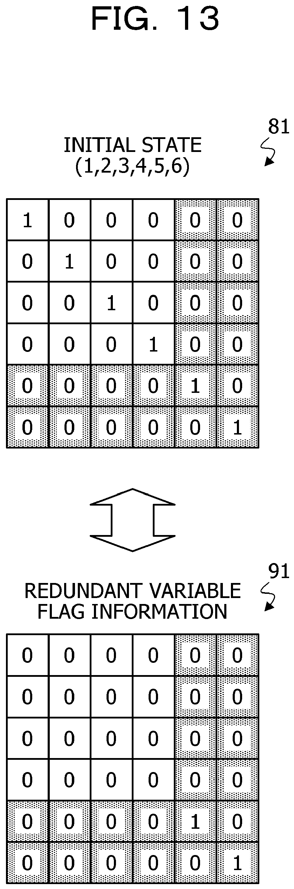

FIG. 13 is a diagram illustrating an example of a redundant variable flag in a case where there are a plurality of redundant elements.

A state 81 indicates an initial state indicated by a permutation (1, 2, 3, 4, 5, 6) obtained by adding redundant elements "5" and "6" to a permutation (1, 2, 3, 4).

Redundant variable flag information 91 indicates a value of the redundant variable flag of each state variable corresponding to the state 81. The plurality of redundant elements in the permutation are managed by the redundant variable flag information 91.

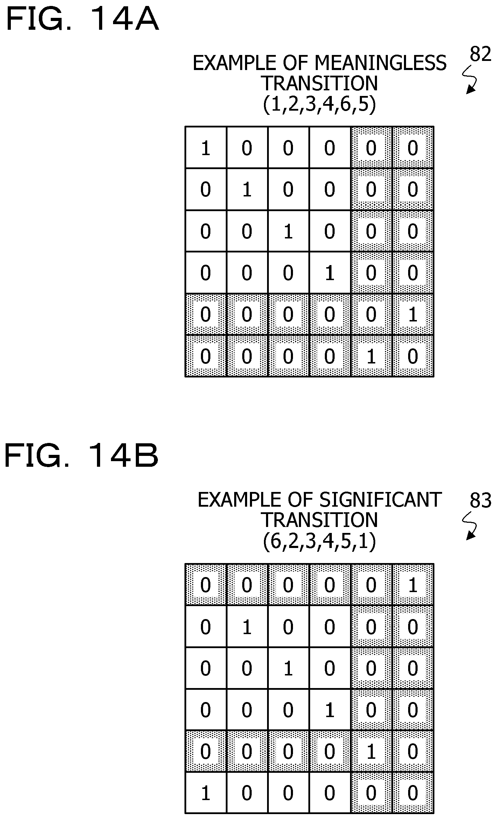

FIGs. 14A and 14B are diagrams illustrating a state transition example.

FIG. 14A illustrates a state 82 after a transition for the state 81. The state 82 corresponds to the permutation (1, 2, 3, 4, 6, 5). The state transition from the state 81 to the state 82 is a transition corresponding to replacement of the redundant elements "5" and "6", and is a meaningless transition. This is because there is no change in an arrangement of (1, 2, 3, 4) obtained by removing the redundant elements "5" and "6" from the permutation (1, 2, 3, 4, 6, 5).

FIG. 14B illustrates a state 83 after a transition for the state 81. The state 83 corresponds to a permutation (6, 2, 3, 4, 5, 1). The state transition from the state 81 to the state 83 is a transition corresponding to replacement of the redundant elements "1" and "6", and is a significant transition. This is because an arrangement of (2, 3, 4, 1) from which the redundant elements "5" and "6" are removed in the permutation (6, 2, 3, 4, 5, 1) is changed with respect to the original arrangement (1, 2, 3, 4).

When the meaningless state transition is executed, the solution search may be delayed. Accordingly, based on the redundant variable flag information 91, the information processing apparatus 100 controls the search unit 110 to suppress the meaningless transition.

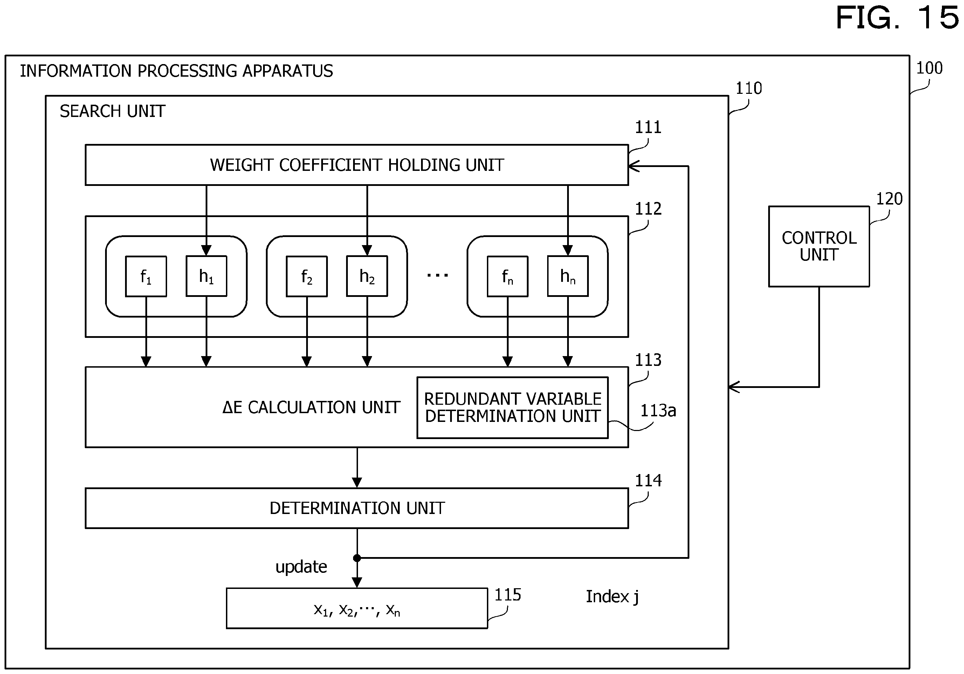

FIG. 15 is a diagram illustrating a functional example of the information processing apparatus.

The fourth embodiment is different from the second embodiment in that the local-field holding unit 112 holds, together with the local fields $h_1$, $h_2$, ..., and $h_n$, redundant variable flags $f_1$, $f_2$, ..., and $f_n$ for the state variables $x_1$, $x_2$, ..., and $x_n$. Another difference from the second embodiment is that the $\Delta E$ calculation unit 113 includes a redundant variable determination unit 113a. Based on the redundant variable flags $f_1$, $f_2$, ..., and $f_n$, the redundant variable determination unit 113a determines whether or not a state variable corresponding to each index corresponds to a redundant variable. Values of the redundant variable flags $f_1$, $f_2$, ..., and $f_n$ are updated such that a value for the redundant variable corresponding to a redundant element is 1 and the other values are 0 in accordance with a state transition. The updating of the values of the redundant variable flags $f_1$, $f_2$, ..., and $f_n$ may be performed by the local-field holding unit 112 or the determination unit 114.

Next, a process procedure of the information processing apparatus 100 based on a redundant variable flag will be described.

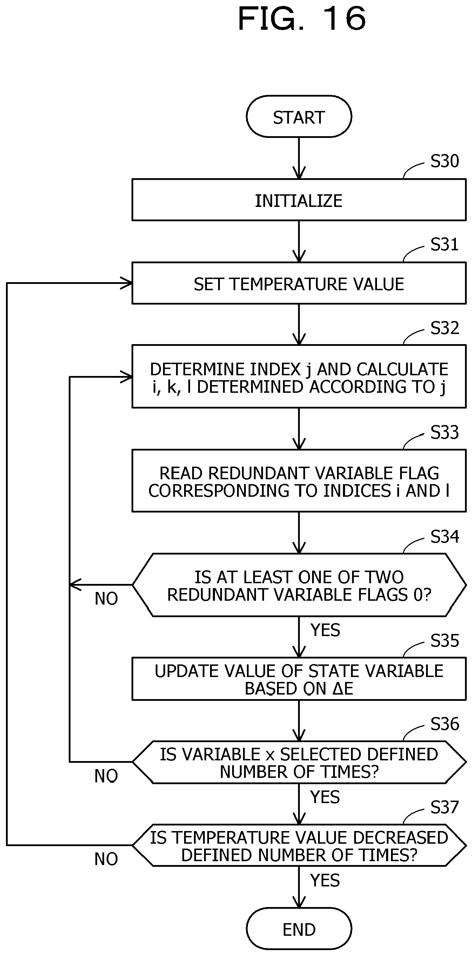

FIG. 16 is a flowchart illustrating a process example of a search unit.

An SA method is used to search for a solution by the search unit 110.

(S30) The control unit 120 initializes the search unit 110. Based on input problem information, the control unit 120 generates information on an energy function into which a plurality of redundant elements are introduced, and inputs the information to the search unit 110.

(S31) The determination unit 114 sets the temperature value T to be used in Equation (6). In a case where step S31 is executed for a first time, the determination unit 114 sets an initial temperature value to the temperature value T. In a case where step S31 is executed for a second time or later, the determination unit 114 sets the temperature value T to a value lower than the previous value.

(S32) The $\Delta E$ calculation unit 113 determines an index j of a state variable $x_j$ having a current value of 0. The index j may be randomly selected or sequentially selected. From the index j, the $\Delta E$ calculation unit 113 calculates indices i, k, and l of three other state variables to be flipped. $x_i = 1$ and $x_l = 1$.

(S33) The redundant variable determination unit 113a reads redundant variable flags $f_i$ and $f_l$ corresponding to the indices i and l.

(S34) The redundant variable determination unit 113a determines whether or not at least one of the two redundant variable flags $f_i$ and $f_l$ is 0. In a case where at least one of the two redundant variable flags $f_i$ and $f_l$ is 0, the process proceeds to step S35. In a case where neither of the two redundant variable flags $f_i$ and $f_l$ is 0, for example, in a case where both are 1, the process proceeds to step S32. In this manner, in a case where both of the state variables $x_i$ and $x_l$ are the redundant variable flag = 1, the index j is selected again.

(S35) The $\Delta E$ calculation unit 113 calculates $\Delta E$ based on Equation (8), and supplies $\Delta E$ to the determination unit 114. With determination of Equation (6) based on $\Delta E$, the determination unit 114 determines whether or not to allow an update of values of the four state variables $x_i$, $x_j$, $x_k$, and $x_l$, and in a case where the update is allowed, the determination unit 114 updates the values of the state variables $x_i$, $x_j$, $x_k$, and $x_l$ in the state holding unit 115. The determination unit 114 outputs the index j to the weight coefficient holding unit 111, and supplies the weight coefficients ($W_{mi}$, $W_{mj}$, $W_{mk}$, and $W_{ml}$) to the local-field holding unit 112. Based on Equation (9), the local-field holding unit 112 updates each local field.

(S36) The $\Delta E$ calculation unit 113 determines whether or not the variable $x_j$ of a change candidate is selected a defined number of times. In a case where the variable $x_j$ of the change candidate is selected the defined number of times, the process proceeds to step S37. In a case where the variable $x_j$ of the change candidate is not selected the defined number of times, the process proceeds to step S32.

(S37) The determination unit 114 determines whether or not the temperature value T is decreased a defined number of times. In a case where the temperature value T is not decreased the defined number of times, the process proceeds to step S31. In a case where the temperature value T is decreased the defined number of times, the search unit 110 outputs an obtained solution having the lowest energy to the control unit 120, and ends the process. In this case, the control unit 120 generates and outputs a solution obtained by removing the redundant variable corresponding to the redundant element from the solution output by the search unit 110.

A state transition by replacement of the redundant elements is a meaningless transition without movement of elements other than the redundant elements, and an unnecessary process. Therefore, by suppressing the transition by the replacement between the redundant elements as described above, the information processing apparatus 100 may suppress the occurrence of the meaningless transition, and speed up solution-searching.

Although an example in which the SA method is executed in the procedure illustrated in FIG. 16 is described, the search unit 110 may execute a replica exchange method. In this case, the setting of the temperature value in step S31 may be performed by exchanging temperature values between replicas. For example, the determination in step S37 may be made based on whether or not the exchange of the temperature values is performed a defined number of times.

As described above, the information processing apparatus 100 executes, for example, the following process.

The control unit 120 generates information on a first energy function including $N^2$ state variables obtained by adding $(N^2-M^2)$ state variables to $M^2$ state variables indicated by problem information given as a permutation optimization problem. The control unit 120 inputs the information on the first energy function to the search unit 110. According to the change amount of a value of the energy function in a case where values of four state variables are changed, the search unit 110 repeatedly performs a process of changing the values of the four state variables so as to satisfy a 2W1H constraint. The control unit 120 acquires a first solution represented by values of the $N^2$ state variables, obtained by the search unit 110 based on the first energy function. By removing values of the $(N^2-M^2)$ state variables from the first solution, the control unit 120 generates a second solution for the permutation optimization problem.

Therefore, the information processing apparatus 100 may cause the search unit 110 to realize a multi-bit transition substantially more than a 4-bit transition, by using an existing 4-bit transition mechanism, and may improve solution-searching performance. Existing hardware that simultaneously performs the 4-bit transition in the search unit 110 may be used, and the solution-searching performance of the search unit 110 may be easily improved. For example, the functions of the control unit 120 of the information processing apparatus 100 may be implemented by the RAM 102 executing a program stored in the CPU 101. A processor including an arithmetic circuit such as the CPU 101 is an example of the processing unit 12 according to the first embodiment. The search unit 110 may be implemented by a coprocessor including an arithmetic circuit such as the FPGA 109 or a GPU.

For example, the values of the $N^2$ state variables indicate a permutation of the plurality of elements. The permutation includes a redundant element corresponding to the added $(N^2-M^2)$ state variables. The control unit 120 generates a weight coefficient matrix based on a problem matrix included in the problem information such that values of the first energy function for the values of the $N^2$ state variables corresponding to the permutation are the same even when the redundant element is at any position with respect to a certain arrangement of elements other than the redundant element in the permutation. The weight coefficient matrix indicates a weight for each pair of two state variables among the $N^2$ state variables. As represented by Equation (2), the weight included in the weight coefficient matrix is used to calculate the change amount of the value of the first energy function.

By introducing the redundant element into the permutation indicating a state represented by the $N^2$ state variables, the information processing apparatus 100 may use an existing 4-bit transition mechanism to realize a multi-bit transition substantially more than a 4-bit transition, and may improve solution-searching performance. When generating the second solution, the control unit 120 may remove the $(N^2-M^2)$ state variables corresponding to the redundant element in the first solution.

For example, the control unit 120 acquires a problem matrix having M rows and M columns included in the problem information. As a new row to be the K-th row (K is a natural number equal to or less than N) and a new column to be the L-th column (L is a natural number equal to or less than N) when the problem matrix is converted into N rows and N columns, the control unit 120 converts the problem matrix into N rows and N columns by inserting rows and columns in which all elements are 0. Based on the problem matrix converted into N rows and N columns, the control unit 120 generates the weight coefficient matrix to be used for calculation of the change amount of the value of the first energy function. The control unit 120 sets an initial value of a value of a state variable of the K-th row and the L-th column when the $N^2$ state variables are arranged in N rows and N columns, to 1.

Therefore, the information processing apparatus 100 may easily include the state variable corresponding to the redundant element in the permutation indicating the state represented by the $N^2$ state variables, for example, a redundant variable to be included in the first energy function.

The control unit 120 may acquire the first solution obtained by the search unit 110 in a case where N is set to each value while a value of N is sequentially increased, and energy of the first solution calculated based on the first energy function. When changing the value of N, a predetermined number of times, the control unit 120 may generate the second solution based on the first solution having the most appropriate energy among a plurality of first solutions acquired from the search unit 110. Alternatively, when the energy of the first solution obtained for the current value of N is more inappropriate than the energy of the first solution obtained for the previous value of N, the control unit 120 may generate the second solution based on the first solution obtained for the previous value of N.

Therefore, the information processing apparatus 100 may increase a possibility of finding more various solutions, and improve solution-searching performance. For example, in a case of a problem of minimizing energy, a solution having the most appropriate energy is a solution having the smallest energy among the plurality of first solutions. In this case, a case where the energy is inappropriate is a case where the energy of the first solution obtained this time is larger than the energy of the first solution obtained at the previous time.

The information processing apparatus 100 further includes the search unit 110. In the permutation of the plurality of elements indicated by the values of the $N^2$ state variables arranged in N rows and N columns, the search unit 110 may set, for each of the $N^2$ state variables, a flag for identifying a position of each of a plurality of redundant elements in the permutation. The redundant element is an element inserted in the permutation by addition of the $(N^2-M^2)$ state variables by the control unit 120. Based on the flag corresponding to each of the $N^2$ state variables, the search unit 110 may omit the process for the change in the values of the four state variables corresponding to replacement of the two redundant elements in the permutation.

Therefore, the information processing apparatus 100 may suppress the state transition trials corresponding to the replacement of the two redundant elements in the permutation, and may reduce the execution of the meaningless process in the search unit 110. For this reason, the information processing apparatus 100 may omit the unnecessary process in the search unit 110, and may further improve the solution-searching performance. The redundant variable flag is an example of the above-described flag.

The function of the information processing apparatus 100 may be applied to, for example, a permutation optimization problem such as an LOP in which only a correlation of permutation elements is a problem.

The information processing according to the first embodiment may be achieved by causing the processing unit 12 to execute a program. The information processing of the second embodiment may be realized by causing the CPU 101 to execute a program. The program may be recorded in the computer-readable recording medium 53.

For example, the program may be distributed by distributing the recording medium 53 in which the program is recorded. The program may be stored in another computer and the program may be distributed via a network. For example, a computer may store (install) the program recorded in the recording medium 53 or the program received from the another computer in a storage device such as the RAM 102 or the HDD 103, read the program from the storage device, and execute the program.

## Claims

1. An information processing apparatus of acquiring a solution to a permutation optimization problem represented by an energy function of an Ising model, the information processing apparatus comprising:

   a storage unit that stores problem information which indicates $M^2$ state variables (M is an integer equal to or more than 3) in the permutation optimization problem; and
   a processing unit that
   generates information on a first energy function which includes $N^2$ state variables obtained by adding ($N^2$-$M^2$) state variables (N is an integer more than M) to the $M^2$ state variables, based on the problem information,
   inputs the information on the first energy function to a search unit which repeatedly performs a process of changing values of four state variables in accordance with a change amount of a value of the energy function in a case where the values of the four state variables are changed so as to satisfy a constraint in which a sum of values of state variables included in each row is 1 and a sum of values of state variables included in each column is 1 when the $N^2$ state variables are arranged in N rows and N columns,
   obtain, from the search unit based on the first energy function, a first solution represented by values of the $N^2$ state variables, and
   generates a second solution to the permutation optimization problem by removing values of the ($N^2$-$M^2$) state variables from the first solution.

2. The information processing apparatus according to claim 1,

   wherein the values of the $N^2$ state variables indicate a permutation of a plurality of elements,
   the permutation includes redundant elements which correspond to the added ($N^2$-$M^2$) state variables, and
   the processing unit generates a weight coefficient matrix which indicates a weight for each pair of two state variables among the $N^2$ state variables, which is used to calculate a change amount of values of the first energy function, based on a problem matrix included in the problem information such that the values of the first energy function with respect to the values of the $N^2$ state variables which correspond to the permutation are the same even when the redundant element is at any position with respect to a certain arrangement of elements other than the redundant element in the permutation.

3. The information processing apparatus according to claim 1,

   wherein the processing unit
   inserts, for a problem matrix of M rows and M columns included in the problem information, rows and columns in which all elements are 0, as a new row to be a K-th row (K is a natural number equal to or less than N) and a new column to be an L-th column (L is a natural number equal to or less than N) when the problem matrix is converted into N rows and N columns and converts the problem matrix into N rows and N columns, and generates a weight coefficient matrix which indicates a weight for each pair of two state variables among the $N^2$ state variables, which is used to calculate a change amount of values of the first energy function, based on the problem matrix converted into N rows and N columns, and
   sets an initial value of a value of a state variable of the K-th row and the L-th column when the $N^2$ state variables

are arranged in N rows and N columns, to 1.

4. The information processing apparatus according to claim 1,

wherein the processing unit
acquires the first solution obtained by the search unit in a case where a value of N is sequentially increased and N is set to each value and energy of the first solution calculated based on the first energy function, and generates, when the value of N is changed a predetermined number of times, the second solution based on the first solution with a most appropriate energy among a plurality of the first solutions acquired from the search unit.

5. The information processing apparatus according to claim 1,

wherein the processing unit
acquires the first solution obtained by the search unit in a case where a value of N is sequentially increased and N is set to each value and energy of the first solution calculated based on the first energy function, and generates, when the energy of the first solution obtained for a current value of N is more inappropriate than the energy of the first solution obtained for a previous value of N, the second solution based on the first solution obtained for the previous value of N.

6. The information processing apparatus according to claim 1, further comprising:

the search unit,
wherein the search unit
sets, in a permutation of a plurality of elements indicated by the values of the $N^2$ state variables arranged in N rows and N columns, a flag for identifying a position in the permutation of each of a plurality of redundant elements inserted into the permutation by adding the $(N^2-M^2)$ state variables, for each of the $N^2$ state variables, and
omits, based on the flag which corresponds to each of the $N^2$ state variables, the process of changing the values of the four state variables which correspond to replacement of two redundant elements in the permutation.

7. An information processing method implemented by a computer configured to acquire a solution to a permutation optimization problem represented by an energy function of an Ising model, the information processing method comprising:

obtaining problem information which indicates $M^2$ state variables (M is an integer equal to or more than 3) in the permutation optimization problem;
generating information on a first energy function which includes $N^2$ state variables obtained by adding $(N^2-M^2)$ state variables (N is an integer more than M) to the $M^2$ state variables, based on the problem information;
inputting the information on the first energy function to a search unit, the search unit being configured to repeatedly perform a process of changing values of four state variables in accordance with a change amount of a value of the energy function in a case where the values of the four state variables are changed so as to satisfy a constraint in which a sum of values of state variables included in each row is 1 and a sum of values of state variables included in each column is 1 when the $N^2$ state variables are arranged in N rows and N columns;
obtaining, from the search unit based on the first energy function, a first solution represented by values of the $N^2$ state variables; and
generating a second solution to the permutation optimization problem by removing values of the $(N^2-M^2)$ state variables from the first solution.

8. An information processing program comprising instructions which, when executed by a computer, cause the computer, which is configured to acquire a solution to a permutation optimization problem represented by an energy function of an Ising model, to perform processing, the processing comprising:

obtaining problem information which indicates $M^2$ state variables (M is an integer equal to or more than 3) in the permutation optimization problem;
generating information on a first energy function which includes $N^2$ state variables obtained by adding $(N^2-M^2)$ state variables (N is an integer more than M) to the $M^2$ state variables, based on the problem information;
inputting the information on the first energy function to a search unit, the search unit being configured to repeatedly perform a process of changing values of four state variables in accordance with a change amount of a value of the energy function in a case where the values of the four state variables are changed so as to satisfy a constraint in which a sum of values of state variables included in each row is 1 and a sum of values of state variables included in each column is 1 when the $N^2$ state variables are arranged in N rows and N columns;

obtaining, from the search unit based on the first energy function, a first solution represented by values of the $N^2$ state variables; and

generating a second solution to the permutation optimization problem by removing values of the $(N^2-M^2)$ state variables from the first solution.

# FIG. 1

EXAMPLE OF STATE BEFORE INTRODUCTION OF REDUNDANT ELEMENT 30

| 1 | 0 | 0 | 0 |
|---|---|---|---|
| 0 | 1 | 0 | 0 |
| 0 | 0 | 1 | 0 |
| 0 | 0 | 0 | 1 |

(1,2,3,4)

EXAMPLE OF STATE AFTER INTRODUCTION OF REDUNDANT ELEMENT 31

| 1 | 0 | 0 | 0 | 0 |
|---|---|---|---|---|
| 0 | 1 | 0 | 0 | 0 |
| 0 | 0 | 1 | 0 | 0 |
| 0 | 0 | 0 | 1 | 0 |
| 0 | 0 | 0 | 0 | 1 |

(1,2,3,4,5)

EXAMPLE OF ORIGINAL STATE

| 1 | 2 | 3 | 4 | 5 |
|---|---|---|---|---|

EXAMPLE OF CANDIDATE OF NEXT STATE

| 2 | 1 | 3 | 4 | 5 |
|---|---|---|---|---|
| 4 | 2 | 3 | 1 | 5 |
| 1 | 3 | 2 | 4 | 5 |
| 1 | 4 | 3 | 2 | 5 |
| 1 | 2 | 4 | 3 | 5 |
| 1 | 2 | 3 | 5 | 4 |
| 1 | 2 | 5 | 4 | 3 |
| 1 | 5 | 3 | 4 | 2 |
| 5 | 2 | 3 | 4 | 1 |

INFORMATION PROCESSING APPARATUS 10

STORAGE UNIT 11

PROCESSING UNIT 12

SEARCH UNIT 20

SECOND SOLUTION 41

| 0 | 1 | 0 | 0 |
|---|---|---|---|
| 0 | 0 | 1 | 0 |
| 0 | 0 | 0 | 1 |
| 1 | 0 | 0 | 0 |

(2,3,4,1)

FIRST SOLUTION 40

| 0 | 0 | 0 | 0 | 1 |
|---|---|---|---|---|
| 0 | 1 | 0 | 0 | 0 |
| 0 | 0 | 1 | 0 | 0 |
| 0 | 0 | 0 | 1 | 0 |
| 1 | 0 | 0 | 0 | 0 |

(5,2,3,4,1)

# FIG. 2

INFORMATION PROCESSING APPARATUS 100

CPU 101

GPU 104

RAM 102

INPUT INTERFACE 105

HDD 103

MEDIUM READER 106

NIC 107

51

52

53

NETWORK 54

ACCELERATOR CARD 108

FPGA

MEMORY 109a

109

# FIG. 3

## FIG. 4A

61

| 1 | 0 | 0 | 0 | 0 |
|---|---|---|---|---|
| 0 | 1 | 0 | 0 | 0 |
| 0 | 0 | 1 | 0 | 0 |
| 0 | 0 | 0 | 1 | 0 |
| 0 | 0 | 0 | 0 | 1 |

(1,2,3,4,5)

## FIG. 4B

62

| 0 | 0 | 0 | 1 | 0 |
|---|---|---|---|---|
| 0 | 1 | 0 | 0 | 0 |
| 0 | 0 | 1 | 0 | 0 |
| 0 | 0 | 0 | 0 | 1 |
| 1 | 0 | 0 | 0 | 0 |

(4,2,3,5,1)

# FIG. 5

INFORMATION PROCESSING APPARATUS — 100

SEARCH UNIT — 110

WEIGHT COEFFICIENT HOLDING UNIT — 111

$h_1$  $h_2$  $\cdots$  $h_n$ — 112

$\Delta E$ CALCULATION UNIT — 113

DETERMINATION UNIT — 114

update

Index j

$x_1, x_2, \cdots, x_n$ — 115

CONTROL UNIT — 120

# FIG. 6

ORIGINAL PROBLEM — D1

$$A = \begin{pmatrix} a_{11} & a_{12} & a_{13} & a_{14} \\ a_{21} & a_{22} & a_{23} & a_{24} \\ a_{31} & a_{32} & a_{33} & a_{34} \\ a_{41} & a_{42} & a_{43} & a_{44} \end{pmatrix}$$

STATE VARIABLE
$$\begin{bmatrix} x_1 \\ \vdots \\ x_{16} \end{bmatrix}$$

MATRIX AFTER ADDITION OF REDUNDANT ELEMENT — D2

$$A = \begin{pmatrix} a_{11} & a_{12} & a_{13} & a_{14} & 0 \\ a_{21} & a_{22} & a_{23} & a_{24} & 0 \\ a_{31} & a_{32} & a_{33} & a_{34} & 0 \\ a_{41} & a_{42} & a_{43} & a_{44} & 0 \\ 0 & 0 & 0 & 0 & 0 \end{pmatrix}$$

STATE VARIABLE
$$\begin{bmatrix} x_1 \\ \vdots \\ x_{16} \\ x_{17} \\ \vdots \\ x_{25} \end{bmatrix}$$

# FIG. 7

71

| 1 | 0 | 0 | 0 |
|---|---|---|---|
| 0 | 1 | 0 | 0 |
| 0 | 0 | 1 | 0 |
| 0 | 0 | 0 | 1 |

(1,2,3,4)

72

| 1 | 0 | 0 | 0 | 0 |
|---|---|---|---|---|
| 0 | 1 | 0 | 0 | 0 |
| 0 | 0 | 1 | 0 | 0 |
| 0 | 0 | 0 | 1 | 0 |
| 0 | 0 | 0 | 0 | 1 |

(1,2,3,4,5)

# FIG. 8

INITIAL STATE

STATE IN WHICH
OPTIMIZATION IS ENDED

72

73

(1,2,3,4,5)

(5,2,3,4,1)

| 1 | 0 | 0 | 0 | 0 |
|---|---|---|---|---|
| 0 | 1 | 0 | 0 | 0 |
| 0 | 0 | 1 | 0 | 0 |
| 0 | 0 | 0 | 1 | 0 |
| 0 | 0 | 0 | 0 | 1 |

| 0 | 0 | 0 | 0 | 1 |
|---|---|---|---|---|
| 0 | 1 | 0 | 0 | 0 |
| 0 | 0 | 1 | 0 | 0 |
| 0 | 0 | 0 | 1 | 0 |
| 1 | 0 | 0 | 0 | 0 |

‖   72a

‖   73a

| 1 | 0 | 0 | 0 |
|---|---|---|---|
| 0 | 1 | 0 | 0 |
| 0 | 0 | 1 | 0 |
| 0 | 0 | 0 | 1 |

| 0 | 1 | 0 | 0 |
|---|---|---|---|
| 0 | 0 | 1 | 0 |
| 0 | 0 | 0 | 1 |
| 1 | 0 | 0 | 0 |

**FIG. 9A**

EP 4 290 416 A1

| COMPARATIVE EXAMPLE IN CASE WHERE REDUNDANT ELEMENT IS NOT INTRODUCED | | | | | T1 |
|---|---|---|---|---|---|
| ORIGINAL STATE | 1 | 2 | 3 | 4 | NUMBER OF ELEMENTS DIFFERENT FROM ORIGINAL STATE |
| CANDIDATE OF NEXT STATE | 2 | 1 | 3 | 4 | 2 |
| | 3 | 2 | 1 | 4 | 2 |
| | 4 | 2 | 3 | 1 | 2 |
| | 1 | 3 | 2 | 4 | 2 |
| | 1 | 4 | 3 | 2 | 2 |
| | 1 | 2 | 4 | 3 | 2 |

**FIG. 9B**

| EXAMPLE OF CASE WHERE REDUNDANT ELEMENT IS INTRODUCED | | | | | | | | | | | NUMBER OF ELEMENTS DIFFERENT FROM ORIGINAL STATE | T2 |
|---|---|---|---|---|---|---|---|---|---|---|---|---|
| ORIGINAL STATE | 1 | 2 | 3 | 4 | 5 | | | | | | | |
| CANDIDATE OF NEXT STATE | 1 | 2 | 3 | 5 | 4 | CANDIDATE OF EQUIVALENT NEXT STATE | 1 | 2 | 3 | 4 | 0 |
| | 1 | 2 | 5 | 4 | 3 | | 1 | 2 | 4 | 3 | 2 |
| | 1 | 5 | 3 | 4 | 2 | | 1 | 3 | 4 | 2 | 3 |
| | 5 | 2 | 3 | 4 | 1 | | 2 | 3 | 4 | 1 | 4 |

# FIG. 10

```
        ┌─────────────┐
        │    START    │
        └─────────────┘
               │
               ▼                        S10
┌──────────────────────────────────┐
│  GENERATE EXTENSION MATRIX AND    │
│     ADD REDUNDANT VARIABLE        │
└──────────────────────────────────┘
               │
               ▼                        S11
┌──────────────────────────────────┐
│   2W1H OPERATION OF SEARCH UNIT   │
└──────────────────────────────────┘
               │
               ▼                        S12
┌──────────────────────────────────┐
│     REMOVE REDUNDANT VARIABLE     │
└──────────────────────────────────┘
               │
               ▼
        ┌─────────────┐
        │     END     │
        └─────────────┘
```

# FIG. 11

```
        ┌─────────┐
        │  START  │
        └────┬────┘
             │           S20
             ▼
┌──────────────────────────────────┐
│ GENERATE EXTENSION MATRIX AND    │
│    ADD k REDUNDANT VARIABLES     │
└──────────────┬───────────────────┘
               │           S21
               ▼
┌──────────────────────────────────┐
│  2W1H OPERATION OF SEARCH UNIT   │
└──────────────┬───────────────────┘
               │           S22
               ▼
      IS VARIABLE k CHANGED DEFINED
  NO       NUMBER OF TIMES?
               │ YES
               │           S23
               ▼
┌──────────────────────────────────┐
│    REMOVE REDUNDANT VARIABLE     │
└──────────────┬───────────────────┘
               ▼
          ┌─────────┐
          │   END   │
          └─────────┘
```

# FIG. 12

$$80$$

$$x = \begin{pmatrix} x_1 & x_2 & x_3 & x_4 & x_5 \\ x_6 & x_7 & x_8 & x_9 & x_{10} \\ x_{11} & x_{12} & x_{13} & x_{14} & x_{15} \\ x_{16} & x_{17} & x_{18} & x_{19} & x_{20} \\ x_{21} & x_{22} & x_{23} & x_{24} & x_{25} \end{pmatrix}$$

$$90$$

$$flag1 = \begin{pmatrix} 0 & 0 & 0 & 0 & 0 \\ 0 & 0 & 0 & 0 & 0 \\ 0 & 0 & 0 & 0 & 0 \\ 0 & 0 & 0 & 0 & 0 \\ 0 & 0 & 0 & 0 & 1 \end{pmatrix}$$

$$90a$$

$$flag2 = \begin{pmatrix} 0 & 0 & 0 & 0 & 0 \\ 0 & 0 & 0 & 0 & 1 \\ 0 & 0 & 0 & 0 & 0 \\ 0 & 0 & 0 & 0 & 0 \\ 0 & 0 & 0 & 0 & 0 \end{pmatrix}$$

# FIG. 13

INITIAL STATE
(1,2,3,4,5,6)

81

| 1 | 0 | 0 | 0 | 0 | 0 |
|---|---|---|---|---|---|
| 0 | 1 | 0 | 0 | 0 | 0 |
| 0 | 0 | 1 | 0 | 0 | 0 |
| 0 | 0 | 0 | 1 | 0 | 0 |
| 0 | 0 | 0 | 0 | 1 | 0 |
| 0 | 0 | 0 | 0 | 0 | 1 |

REDUNDANT VARIABLE
FLAG INFORMATION

91

| 0 | 0 | 0 | 0 | 0 | 0 |
|---|---|---|---|---|---|
| 0 | 0 | 0 | 0 | 0 | 0 |
| 0 | 0 | 0 | 0 | 0 | 0 |
| 0 | 0 | 0 | 0 | 0 | 0 |
| 0 | 0 | 0 | 0 | 1 | 0 |
| 0 | 0 | 0 | 0 | 0 | 1 |

# FIG. 14A

EXAMPLE OF MEANINGLESS
TRANSITION
(1,2,3,4,6,5)

82

| 1 | 0 | 0 | 0 | 0 | 0 |
|---|---|---|---|---|---|
| 0 | 1 | 0 | 0 | 0 | 0 |
| 0 | 0 | 1 | 0 | 0 | 0 |
| 0 | 0 | 0 | 1 | 0 | 0 |
| 0 | 0 | 0 | 0 | 0 | 1 |
| 0 | 0 | 0 | 0 | 1 | 0 |

# FIG. 14B

EXAMPLE OF SIGNIFICANT
TRANSITION
(6,2,3,4,5,1)

83

| 0 | 0 | 0 | 0 | 0 | 1 |
|---|---|---|---|---|---|
| 0 | 1 | 0 | 0 | 0 | 0 |
| 0 | 0 | 1 | 0 | 0 | 0 |
| 0 | 0 | 0 | 1 | 0 | 0 |
| 0 | 0 | 0 | 0 | 1 | 0 |
| 1 | 0 | 0 | 0 | 0 | 0 |

## FIG. 15

INFORMATION PROCESSING APPARATUS ‎100

SEARCH UNIT ‎110

WEIGHT COEFFICIENT HOLDING UNIT ‎111

$f_1$  $h_1$  $f_2$  $h_2$  $\cdots$  $f_n$  $h_n$ ‎112

CONTROL UNIT ‎120

ΔE CALCULATION UNIT ‎113

REDUNDANT VARIABLE DETERMINATION UNIT ‎113a

DETERMINATION UNIT ‎114

update

$x_1, x_2, \cdots, x_n$ ‎115

Index j

EP 4 290 416 A1

# FIG. 16

```
                    ┌──────────┐
                    │  START   │
                    └────┬─────┘
                         │                      ╭─ S30
              ┌──────────▼──────────┐
              │     INITIALIZE      │
              └──────────┬──────────┘
                         │                      ╭─ S31
              ┌──────────▼──────────┐
    ┌────────▶│ SET TEMPERATURE VALUE│
    │         └──────────┬──────────┘
    │                    │                      ╭─ S32
    │         ┌──────────▼──────────────────┐
    │    ┌───▶│ DETERMINE INDEX j AND CALCULATE│
    │    │    │ i, k, l DETERMINED ACCORDING TO j│
    │    │    └──────────┬──────────────────┘
    │    │               │                      ╭─ S33
    │    │    ┌──────────▼──────────────────┐
    │    │    │ READ REDUNDANT VARIABLE FLAG │
    │    │    │ CORRESPONDING TO INDICES i AND l│
    │    │    └──────────┬──────────────────┘
    │    │               │                      ╭─ S34
    │    │         IS AT LEAST ONE OF TWO
    │    │   NO  REDUNDANT VARIABLE FLAGS 0?
    │    │◀────────
    │    │               │ YES                  ╭─ S35
    │    │    ┌──────────▼──────────────────┐
    │    │    │ UPDATE VALUE OF STATE VARIABLE│
    │    │    │       BASED ON ΔE            │
    │    │    └──────────┬──────────────────┘
    │    │               │                      ╭─ S36
    │    │         IS VARIABLE x SELECTED DEFINED
    │    │   NO        NUMBER OF TIMES?
    │    └────────
    │                    │ YES                  ╭─ S37
    │              IS TEMPERATURE VALUE DECREASED
    │        NO     DEFINED NUMBER OF TIMES?
    └────────
                         │ YES
                    ┌────▼─────┐
                    │   END    │
                    └──────────┘
```

# EUROPEAN SEARCH REPORT

Europäisches Patentamt
European Patent Office
Office européen des brevets

**Application Number**

EP 23 16 6458

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BAGHERBEIK MOHAMMAD ET AL: "A Permutational Boltzmann Machine with Parallel Tempering for Solving Combinatorial Optimization Problems", 31 August 2020 (2020-08-31), TOPICS IN CRYPTOLOGY – CT-RSA 2020 : THE CRYPTOGRAPHERS' TRACK AT THE RSA CONFERENCE 2020, SAN FRANCISCO, CA, USA, FEBRUARY 24-28, 2020, CORNELL UNIVERSITY LIBRARY, 201 OLIN LIBRARY CORNELL UNIVERSITY ITHACA, NY 14853, PAGE(S) 317 – 331, XP047560373, [retrieved on 2020-08-31] * abstract; sections 2.1, 3.1, 3.2, 4.1, 4.2, 4.3 Equation 2 Algorithm 1; figure 2 * ----- | 1-8 | INV. G06N5/01 |
| A | CODOGNET PHILIPPE: "Modeling the Costas Array Problem in QUBO for Quantum Annealing", 4 April 2022 (2022-04-04), SPRINGER INTERNATIONAL PUBLISHING, PAGE(S) 143 – 158, XP047621376, * abstract; sections 1, 2, 2.1, 2.2, 3, 4 * ----- | 1-8 | TECHNICAL FIELDS SEARCHED (IPC) G06N |
| A | EP 3 889 843 A1 (FUJITSU LTD [JP]) 6 October 2021 (2021-10-06) * claims 1-6 * ----- -/-- | 1-8 | |

The present search report has been drawn up for all claims

| Place of search | Date of completion of the search | Examiner |
|---|---|---|
| The Hague | 19 October 2023 | Tebbal Barracosa, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

## EUROPEAN SEARCH REPORT

Application Number

EP 23 16 6458

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | XIAOYUAN LIU ET AL: "Leveraging Special-Purpose Hardware for Local Search Heuristics", ARXIV.ORG, CORNELL UNIVERSITY LIBRARY, 201 OLIN LIBRARY CORNELL UNIVERSITY ITHACA, NY 14853, 28 November 2020 (2020-11-28), XP081825170, * abstract; sections 2.1, 2, 3.2, 3.4 * ----- | 1-8 | |
| A | CODOGNET PHILIPPE CODOGNET@IS S U-TOKYO AC JP: "Constraint Solving by Quantum Annealing", 2020 THE 9TH INTERNATIONAL CONFERENCE ON NETWORKS, COMMUNICATION AND COMPUTING, ACMPUB27, NEW YORK, NY, USA, 9 August 2021 (2021-08-09), pages 1-10, XP058655144, DOI: 10.1145/3458744.3473364 ISBN: 978-1-4503-8961-7 * abstract; sections 2, 2.1, 2.2, 3, 3.2, 4, 4.1, 4.4 * ----- | 1-8 | TECHNICAL FIELDS SEARCHED (IPC) |

The present search report has been drawn up for all claims

| Place of search | Date of completion of the search | Examiner |
|---|---|---|
| The Hague | 19 October 2023 | Tebbal Barracosa, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 16 6458

This annex lists the patent family members relating to the patent documents cited in the above-mentioned European search report.
The members are as contained in the European Patent Office EDP file on
The European Patent Office is in no way liable for these particulars which are merely given for the purpose of information.

19-10-2023

| Patent document cited in search report | | Publication date | Patent family member(s) | | Publication date |
|---|---|---|---|---|---|
| EP 3889843 | A1 | 06-10-2021 | CN | 113449901 A | 28-09-2021 |
| | | | EP | 3889843 A1 | 06-10-2021 |
| | | | JP | 2021157361 A | 07-10-2021 |
| | | | US | 2021303755 A1 | 30-09-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021157361 A
- JP 9160981 A
- US 20200242295 A